# EUROPEAN PATENT SPECIFICATION

(11) **EP 2 908 365 B1**
(45) Date of publication and mention of the grant of the patent: **03.05.2017**
(21) Application number: 13845202.4
(22) Date of filing: 11.10.2013
(51) Int. Cl.: H01M 4/505, C01G 53/00, H01M 4/36, H01M 4/525, H01M 4/587, H01M 10/052, H01M 10/0567, H01M 10/0568, H01M 10/0569, H01M 10/0525, H01M 4/131, H01M 4/133, H01M 4/02

(54) **POSITIVE ELECTRODE ACTIVE SUBSTANCE FOR NONAQUEOUS ELECTROLYTE SECONDARY CELL, METHOD FOR PRODUCING POSITIVE ELECTRODE ACTIVE SUBSTANCE FOR NONAQUEOUS ELECTROLYTE SECONDARY CELL, AND NONAQUEOUS ELECTROLYTE SECONDARY CELL**
POSITIVELEKTRODEN-WIRKSTOFF FÜR EINE SEKUNDÄRZELLE MIT NICHTWÄSSRIGEM ELEKTROLYTEN, VERFAHREN ZUR HERSTELLUNG DES POSITIVELEKTRODEN-WIRKSTOFFS FÜR EINE SEKUNDÄRZELLE MIT NICHTWÄSSRIGEM ELEKTROLYTEN UND SEKUNDÄRZELLE MIT NICHTWÄSSRIGEM ELEKTROLYTEN
SUBSTANCE ACTIVE D'ÉLECTRODE POSITIVE POUR PILE SECONDAIRE À ÉLECTROLYTE NON AQUEUX, PROCÉDÉ DE PRODUCTION DE SUBSTANCE ACTIVE D'ÉLECTRODE POSITIVE POUR PILE SECONDAIRE À ÉLECTROLYTE NON AQUEUX, ET PILE SECONDAIRE À ÉLECTROLYTE NON AQUEUX

(30) Priority: 12.10.2012 JP 2012227383
(43) Date of publication of application: 19.08.2015
(73) Proprietor: NISSAN MOTOR CO., LTD., Yokohama-shi, Kanagawa 220-8623 (JP)
(72) Inventor: YAMAMOTO, Shinji, Atsugi-shi Kanagawa 243-0123 (JP); MITSUYAMA, Tomohiro, Atsugi-shi Kanagawa 243-0123 (JP)
(74) Representative: Hoefer & Partner Patentanwälte mbB
(86) International application number: PCT/JP2013/077856
(87) International publication number: WO 2014/058068

(56) References cited:
- WO-A1-2011/114534
- WO-A1-2011/114534
- WO-A1-2012/121220
- JP-A- 2003 303 592
- JP-A- 2006 093 067
- JP-A- 2006 164 758
- JP-A- 2007 242 581
- JP-A- 2008 127 233
- JP-A- 2012 003 879
- US-A1- 2008 116 418

## Description

### Technical Field

The present invention relates to a positive electrode active material for a non-aqueous electrolyte secondary cell, a method for producing the positive electrode active material for a non-aqueous electrolyte secondary cell, and a non-aqueous electrolyte secondary cell.

### Background Art

Currently, non-aqueous electrolyte secondary cells including a lithium-ion secondary cell utilized for portable devices such as mobile phones have been commercialized. The non-aqueous electrolyte secondary cells generally have a configuration in which a positive electrode formed by coating a positive electrode active material and the like on a current collector is connected with a negative electrode formed by coating a negative electrode active material and the like on a current collector via an electrolyte layer retaining a non-aqueous electrolytic solution or a non-aqueous electrolyte gel in a separator. In addition, the charge and discharge reactions of the cell occur as an ion such as a lithium ion is occluded into and released from the electrode active material.

In recent years, it is required to diminish the amount of carbon dioxide in order to deal with global warming. Hence, the non-aqueous electrolyte secondary cell with less environmental impact is utilized not only in the portable devices and the like but also in the power supply devices of electrically driven vehicles such as a hybrid electric vehicle (HEV), an electric vehicle (EV) and a fuel cell vehicle.

The non-aqueous electrolyte secondary cell directed to the application to electrically driven vehicles is required to exhibit a high output and a high capacity. As the positive electrode active material used in the positive electrode of a non-aqueous electrolyte secondary cell for electrically driven vehicle, a solid solution positive electrode active material containing a transition metal such as lithium and manganese is known. In particular, manganese is suitably used for the positive electrode active material since the raw material is inexpensive and easily available due to its relative abundance as a resource and exerts less impact on the environment. Such a solid solution positive electrode active material is known to have a problem that the transition metal dissolves into the electrolytic solution while repeating the charge and discharge of the secondary cell. The crystal structure of the positive electrode active material is changed by the dissolution of a transition metal, and thus a decrease in the capacity of the non-aqueous electrolyte secondary cell is caused. As the measure to prevent the dissolution of a transition metal, for example, a technique of the related art using a positive electrode active material having the following composition is known (Patent Literature 1). It is xLiMO₂·(1-x)Li₂M'O₃, where 0 < x <1, M is V, Mn, Fe, Co or Ni, and M' is Mn, Ti, Zr, Ru, Re or Pt.

WO 2011/114534 A1 discloses a lithium secondary battery provided at the cathode with a cathode active material that comprises a lithium/manganese complex oxide represented by the general formula Liₓ(MnₐCO_{b}Ni_{c})_{2-x-y})M_{y}O₂ (1) (in formula 1: a, b, and c satisfy 0 < a < 0.65, 0 = b, and 0 = c; and x and y satisfy 0 < x < 1.3 and 0 < y < 0.05) and that is characterized by the element M in the abovementioned formula (1) being an element having a greater binding energy with oxygen than Mn, Co, or Ni. US 2008/116418 A1 discloses a lithium-manganese-based composite oxide containing Ti and Ni, which is represented by the compositional formula: Li₁₊ₓ(Mn₁₋ₙ₋ₘNiₘTiₙ)₁₋ₓO₂, wherein 0<x<=0.33, 0.05<m<0.3, and 0.3<n<0.5, and includes a crystal phase of layered rock-salt type structure. The composite oxide is a novel material that is capable of maintaining an average discharge voltage of 3 V or more over long charge/discharge cycles, while providing a discharge capacity equal to or higher than those of lithium-cobalt-oxide-based positive electrode materials, and that can be prepared using starting materials that are inexpensive and less limited as natural resources, while exhibiting improved charge/discharge characteristics over known low-cost positive electrode materials.

### Citation List

### Patent Literature

Patent Literature 1: US 2004/0081888 A

### Summary of Invention

However, the above technique of the related art is not yet sufficient in terms of the effect of preventing the dissolution of a transition metal. In the above technique of the related art, another element such as Ti is added to the composition in addition to the transition metal, but it is considered that the transition metal in the crystal structure of the positive electrode active material is not sufficiently substituted by Ti and the like and the dissolution of a transition metal still occurs. As a result, a decrease in the capacity as a positive electrode active material is caused as charge and discharge of the secondary cell are repeated.

Accordingly, an object of the present invention is to provide a means capable of suppressing the dissolution of a transition metal, particularly manganese in a positive electrode active material for a non-aqueous electrolyte secondary cell.

The present invention is defined by the appendant claims.
The present inventors have conducted extensive research in order to solve the above problem. As a result, it has been found that a non-aqueous electrolyte secondary cell capable of diminishing the dissolution of a transition metal at the time of charging and discharging the cell and excellent in cycle characteristics is obtained by the use of a material having a specific composition and a specific structure as the positive electrode active material used in a non-aqueous electrolyte secondary cell. In other words, the positive electrode active material of the present invention has the following Composition Formula (1):

Li_{1.5}[NiₐMn_{b}CO_{c}[Li]_{d}[X]ₑ]O_{z} (1)

Here, X is at least one kind of Ti, Zr and Nb, 0. 1 ≤ e ≤ 0.3, a + b + c + d + e = 1.5, 0.1 ≤ d ≤ 0.4, and 1.1 ≤ [a + b + c + e] ≤ 1.4. z represents the number of oxygen satisfying the valence. Moreover, the positive electrode active material of Composition Formula (1) shows diffraction peaks indicating a rock salt type layered structure at 20 to 23°, 35 to 40° (101), 42 to 45° (104) and 64 to 65 (108)/65 to 66 (110) in the X-ray diffraction (XRD) measurement using Cu-K_{α} radiation.

### Brief Description of Drawings

Fig. 1 is a cross-sectional schematic view schematically illustrating the overall structure of a non-bipolar lithium ion secondary cell according to an embodiment of the present invention.
Fig. 2 is a cross-sectional schematic view schematically illustrating the overall structure of a bipolar lithium ion secondary cell according to an embodiment of the present invention.
Fig. 3 is a chart illustrating the X-ray diffraction pattern of a positive electrode active material C0 which does not contain Ti.
Fig. 4 is a chart illustrating the X-ray diffraction pattern of a positive electrode active material C1 obtained in Example 1.
Fig. 5 is a chart illustrating the X-ray diffraction pattern of a positive electrode active material C2 obtained in Example 2.
Fig. 6 is a chart illustrating the X-ray diffraction pattern of a positive electrode active material C4 obtained in Example 4;
Fig. 7 is a chart illustrating the X-ray diffraction pattern of a positive electrode active material C7 obtained in Reference Example 7.
Fig. 8 is a chart illustrating the X-ray diffraction pattern of a positive electrode active material C9 obtained in Example 9.
Fig. 9 is a chart illustrating the X-ray diffraction pattern of a positive electrode active material C10 obtained in Example 10.
Fig. 10 is a chart illustrating the X-ray diffraction pattern of a positive electrode active material C11 obtained in Example 11.
Fig. 11 is a chart illustrating the X-ray diffraction pattern of a positive electrode active material C13 obtained in Example 13.

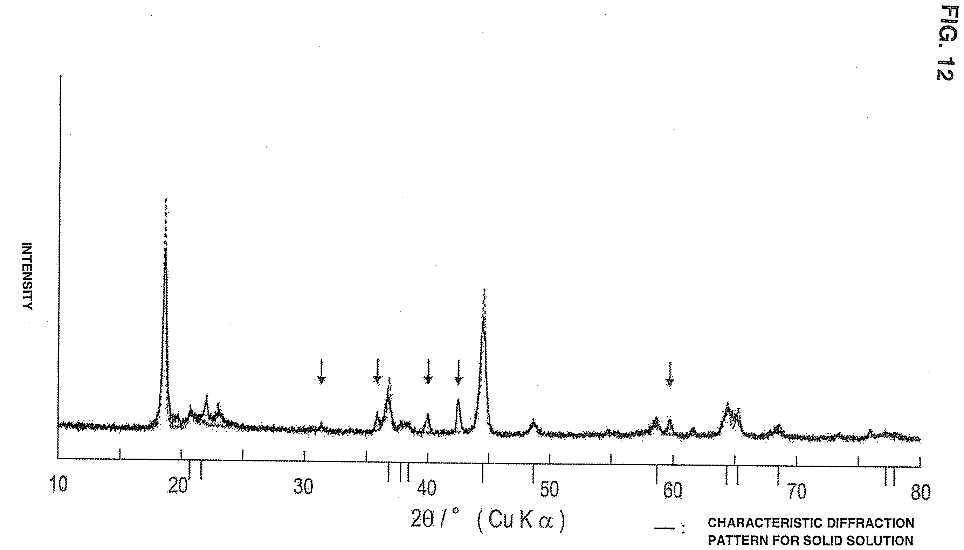

Fig. 12 is a chart illustrating the X-ray diffraction pattern of a positive electrode active material D1 obtained in Comparative Example 1.
Fig. 13 is a chart illustrating the X-ray diffraction pattern of a positive electrode active material D2 obtained in Comparative Example 2.

### Description of Embodiments

An embodiment of the present invention is a positive electrode active material which is contained in a positive electrode active material layer on the surface of a current collector. The current collector and the positive electrode active material layer constitute a positive electrode. A non-aqueous electrolyte secondary cell is constituted to have a power generating element having this positive electrode, a negative electrode having a negative electrode active material layer formed on the surface of a current collector, and an electrolyte layer. The positive electrode active material of the present embodiment can suppress the dissolution of a transition metal as at least one kind of Ti, Zr and Nb is incorporated into the transition metal layer of the positive electrode active material to substitute the transition metal.

Hereinafter, a non-aqueous electrolyte secondary cell using the positive electrode active material of the present embodiment will be described with reference to the accompanying drawings, but the technical scope of the present invention should be determined based on the description of the appended claims and is not limited to the following embodiments. Meanwhile, dimensional ratios in the drawings are exaggerated for convenience of explanation and thus may be different from the actual ratios.

### [Non-aqueous electrolyte secondary cell]

The non-aqueous electrolyte secondary cell according to the present embodiment is not particularly limited as long as it is a secondary cell using the positive electrode active material of the present embodiment, and a lithium ion secondary cell is typically mentioned. In other words, it is a non-aqueous electrolyte secondary cell equipped with the positive electrode of the present embodiment, a negative electrode containing a negative electrode active material capable of intercalating and deintercalating a lithium ion, and an electrolyte layer interposed between the positive electrode and the negative electrode. In the following description, a lithium ion secondary cell will be described as an example, but the present invention is not limited thereto.

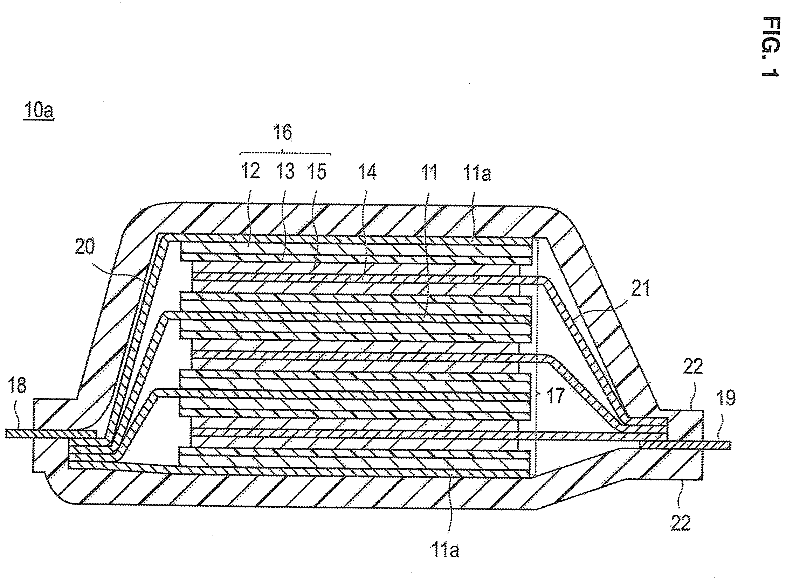

Fig. 1 is a cross-sectional schematic view schematically illustrating the overall structure of a lithium ion secondary cell laminated in parallel (hereinafter, also simply referred to as the "parallel laminate type cell") according to an embodiment of the present invention. As illustrated in Fig. 1, a parallel laminate type cell 10a of the present embodiment has a structure in which a substantially rectangular power generating element 17 by which the charge and discharge reactions actually proceed is encapsulated inside a laminate film 22 as an exterior material for cell. In more detail, it has a structure in which the power generating element 17 is housed and tightly encapsulated in a polymer-metal composite laminate film used as an exterior material for cell by heat sealing and joining the entire periphery thereof.

The power generating element 17 has a structure in which a negative electrode having a negative electrode active material layer 12 disposed on both surfaces of a negative electrode current collector 11 (only one surface for the lowermost layer and the uppermost layer of the power generating element), an electrolyte layer 13, and a positive electrode having a positive electrode active material layer 15 disposed on both surfaces of a positive electrode current collector 14 are laminated. Specifically, the negative electrode, the electrolyte layer 13 and the positive electrode are laminated in this order such that one negative electrode active material layer 12 faces, via the electrolyte layer 13, the positive electrode active material layer 15 adjacent to this negative electrode active material layer 12. A positive electrode active material having a specific composition and a specific structure is used in the positive electrode active material layer as described below.

Hence, the negative electrode, the electrolyte layer 13 and the positive electrode which are adjacent to one another constitute one single cell layer 16. Consequently, it can be said that the parallel laminate type cell 10 of the present embodiment has a configuration in which a plurality of the single cell layers 16 is laminated to be electrically connected in parallel. In addition, a seal portion (insulating layer) (not illustrated) may be provided to the outer periphery of the single cell layer 16 for the insulation between the negative electrode current collector 11 and the positive electrode current collector 14 which are adjacent to each other. The negative electrode active material layer 12 is disposed only on one surface of each of the outermost negative electrode current collectors 11a which are positioned at both outermost layers of the power generating element 17. Meanwhile, it is also possible to reverse the disposition of negative electrode and positive electrode from that in Fig. 1 so that the outermost positive electrode current collectors are positioned at both outermost layers of the power generating element 17 and the positive electrode active material layer is disposed only on one surface of the outermost positive electrode current collectors.

A negative electrode current collector plate 18 and a positive electrode current collector plate 19 which are electrically connected to each electrode (negative electrode and positive electrode) are attached to the negative electrode current collector 11 and the positive electrode current collector 14, respectively and have a structure in which they protrude outside the laminate film 22 so as to be sandwiched between the ends of the laminate film 22. The negative electrode current collector plate 18 and the positive electrode current collector plate 19 may be attached to the negative electrode current collector 11 and the positive electrode current collector 14 of each electrode via a negative electrode terminal lead 20 and a positive electrode terminal lead 21 by ultrasonic welding, resistance welding or the like if necessary (this form is illustrated in Fig. 1). However, the negative electrode current collector 11 may be extended to be the negative electrode current collector plate 18 and to protrude from the laminate film 22. In the same manner, the positive electrode current collector 14 may be extended to be the positive electrode current collector plate 19 and to protrude from the exterior material for cell 22.

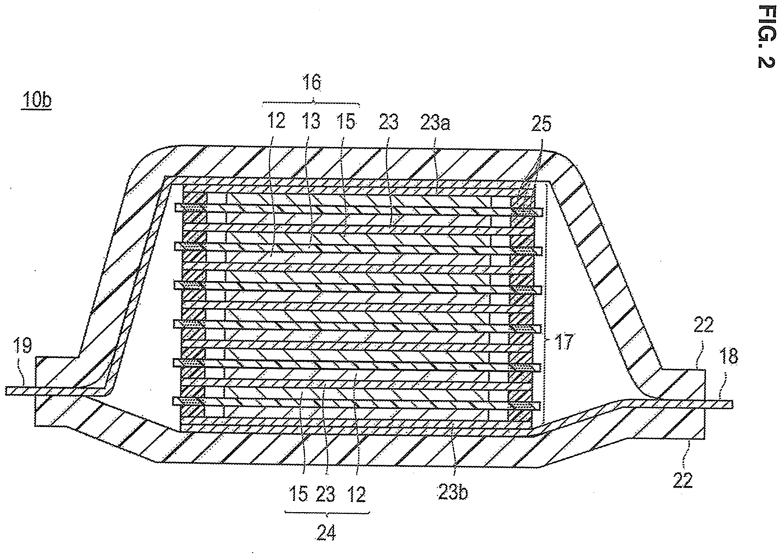

Fig. 2 is a cross-sectional schematic view schematically illustrating the overall structure of a bipolar lithium ion secondary cell laminated in series (hereinafter, also simply referred to as the "series laminate type cell") according to an embodiment of the present invention. A series laminate type cell 10b illustrated in Fig. 2 has a structure in which a substantially rectangular power generating element 17 by which the charge and discharge reactions actually proceed is encapsulated inside the laminate film 22 as an exterior material for cell.

As illustrated in Fig. 2, the power generating element 17 of the series laminate type cell 10b has a plurality of bipolar electrodes 24 having a positive electrode active material layer 15 electrically coupled to one surface of a current collector 23 and a negative electrode active material layer 12 electrically coupled to the surface on the opposite side of the current collector 11. A positive electrode active material having a specific composition and a specific structure is used in the positive electrode active material layer as described below. Each bipolar electrode 24 is laminated via the electrolyte layer 13 to form the power generating element 17. Meanwhile, the electrolyte layer 13 has a structure in which the electrolyte is retained at the central portion in the plane direction of the separator as the substrate. In this case, each bipolar electrode 24 and the electrolyte layer 13 are alternately laminated such that the positive electrode active material layer 15 of one bipolar electrode 24 faces, via the electrolyte layer 13, the negative electrode active material layer 12 of another bipolar electrode 24 that is adjacent to the one bipolar electrode 24. In other words, the electrolyte layer 13 is disposed to be sandwiched between the positive electrode active material layer 15 of one bipolar electrode 24 and the negative electrode active material layer 12 of another bipolar electrode 24 that is adjacent to the one bipolar electrode 24.

The positive electrode active material layer 15, the electrolyte layer 13 and the negative electrode active material layer 12 which are adjacent to one another constitute one single cell layer 16. Consequently, it can be said that the series laminate type cell 10b of the present embodiment has a configuration in which a plurality of the single cell layers 16 is laminated to be electrically connected in series. In addition, the seal portion (insulating portion) 25 is disposed at the outer periphery of the single cell layer 16 for the purpose of preventing the liquid junction caused by the leakage of electrolytic solution from the electrolyte layer 13. Meanwhile, the positive electrode active material layer 15 is formed only on one surface of the outermost current collector 23a on the positive electrode side positioned at the outermost layer of the power generating element 17. In addition, the negative electrode active material layer 12 is formed only on one surface of the outermost current collector 23b on the negative electrode side positioned at the outermost layer of the power generating element 17. However, the positive electrode active material layer 15 may be formed on both surfaces of the outermost current collector 23a on the positive electrode side. In the same manner, the negative electrode active material layer 12 may be formed on both surfaces of the outermost current collector 23b on the negative electrode side.

Moreover, in the series laminate type cell 10b illustrated in Fig. 2, the positive electrode current collector plate 19 is disposed so as to be adjacent to the outermost current collector 23a on the positive electrode side, and is extended to protrude from the laminate film 22 as an exterior material for cell. On the other hand, the negative electrode current collector plate 18 is disposed so as to be adjacent to the outermost current collector 23b on the negative electrode side and, in the same manner, is extended to protrude from the laminate film 22 as an exterior material for cell.

In the series laminate type cell 10b illustrated in Fig. 2, the insulating portion 25 is usually provided around each single cell layer 16. The insulating portion 25 is provided for the purpose of preventing the contact between adjacent current collectors 23 in the cell or the short circuit caused by slight lack of uniformity of the ends of the single cell layer 16 in the power generating element 17. The provision of such an insulating portion 25 makes it possible to secure long-term reliability and safety, and thus a high-quality series laminate type cell 10b can be provided.

Meanwhile, the laminating number of the single cell layer 16 is adjusted according to the desired voltage. In addition, in the series laminate type cell 10b, the laminating number of the single cell layer 16 may be fewer as long as a sufficient output can be secured even when the thickness of the cell is significantly thin. The series laminate type cell 10b also needs to be protected from an external impact during usage and from the environmental degradation. Hence, it is preferable to have a structure in which the power generating element 17 is encapsulated in the laminate film 22 as an exterior material for cell in a vacuum and the positive electrode current collector plate 19 and the negative electrode current collector plate 18 are taken out of the laminate film 22.

The positive electrode active material layer 15 in Figs. 1 and 2 contains a positive electrode active material having a specific composition and a specific structure to be described below. This makes it possible for the non-aqueous electrolyte secondary cell directed to the application to electrically driven vehicles to realize a high output and a high capacity and to have less decrease in the capacity caused by the repeated charge and discharge. Hereinafter, each constituent of the non-aqueous electrolyte secondary cell will be described in detail.

### [Positive electrode]

The positive electrode has a function to generate electrical energy by receiving and releasing a lithium ion together with the negative electrode. The positive electrode essentially includes a current collector and a positive electrode active material layer and is fabricated by forming the positive electrode active material layer on the surface of the current collector.

### (Current collector)

The current collector includes an electrical conducting material, and the positive electrode active material layer is disposed on one or both surfaces thereof. The material constituting the current collector is not particularly limited, and it is possible to employ, for example, a metal, a conducting polymeric material, or a resin which is obtained by adding a conductive filler to a non-conducting polymeric material and thus exhibits electrical conductivity.

Examples of the metal may include aluminum, nickel, iron, stainless steel (SUS), titanium, and copper. It is possible to preferably use a clad material of nickel and aluminum, a clad material of copper and aluminum, a plating material of a combination of these metals and the like in addition to the above metals. Moreover, it may be a foil formed by covering aluminum on the metal surface. Among these, it is preferable to use aluminum, stainless steel, or copper from the viewpoint of the electrical conductivity and the cell operating potential.

In addition, examples of the conducting polymeric material may include polyaniline, polypyrrole, polythiophene, polyacetylene, polyparaphenylene, polyphenylene vinylene, polyacrylonitrile, and polyoxadiazole. Such a conducting polymeric material exhibits sufficient electrical conductivity even without the addition of a conductive filler and thus is advantageous in terms of the facilitation of manufacturing process or the weight saving of current collector.

Examples of the non-conducting polymeric material may include polyethylene (PE; high density polyethylene (HDPE) and low density polyethylene (LDPE)), polypropylene (PP), polyethylene terephthalate (PET), polyether nitrile (PEN), polyimide (PI), polyamide-imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), and polystyrene (PS). Such a non-conducting polymeric material may exhibit excellent electric potential resistance or solvent resistance.

A conductive filler may be added to the above conducting polymeric material or non-conducting polymeric material if necessary. A conductive filler is required particularly in a case where the resin to be the substrate of the current collector is formed of only a non-conductive polymer, in order to impart electrical conductivity to the resin. It is possible to use any material as the conductive filler without particular limitation as long as it is a substance exhibiting electrical conductivity. For example, a metal and conductive carbon may be mentioned as the material which is excellent in electrical conductivity, electric potential resistance or lithium ion blocking properties. The metal is not particularly limited but it is preferable to contain at least one kind of metal selected from the group consisting of Ni, Ti, Al, Cu, Pt, Fe, Cr, Sn, Zn, In, Sb and K or an alloy or a metal oxide containing these metals. The conductive carbon is not particularly limited but it is preferable to contain at least one kind selected from the group consisting of acetylene black, Vulcan, Black Pearl, carbon nanofiber, Ketjen black, carbon nanotube, carbon nanohorn, carbon nanoballoon, and fullerene. The addition amount of the conductive filler is not particularly limited as long as sufficient electrical conductivity can be imparted to the current collector by the amount, and it is generally about 5 to 35% by mass.

The size of the current collector is determined depending on the cell usage. For example, a current collector having a large area is used when used for a large scale cell which is required to have a high energy density. The thickness of the current collector is also not particularly limited and is usually about 1 to 100 µm.

### (Positive electrode active material layer)

The positive electrode active material layer essentially contains a positive electrode active material having a specific composition and a specific structure. The positive electrode active material layer may further contain additives such as a positive electrode active material other than that, a conductive auxiliary, and a binder.

### Positive electrode active material

The positive electrode active material has a composition that can release a lithium ion at the time of charge and occlude the lithium ion at the time of discharge. In the present embodiment, a positive electrode active material having the following Composition Formula (1) is used.

Li_{1.5}[NiₐMn_{b}CO_{c}[Li]_{d}[X]ₑ]O_{z} (1)

Here, X is at least one kind of Ti, Zr and Nb, a + b + c + d + e = 1.5, 1.1 ≤ [a + b + c + e] ≤ 1.4, 0.1 ≤ d ≤ 0.4, and 0. 1 ≤ e ≤ 0.7. z represents the number of oxygen satisfying the valence.

Moreover, the positive electrode active material having Composition Formula (1) above shows diffraction peaks indicating a rock salt type layered structure at 20 to 23°, 35 to 40° (101), 42 to 45° (104) and 64 to 65 (108)/65 to 66 (110) in the X-ray diffraction (XRD) measurement using Cu-K_{α} radiation. In this case, it is preferable that the positive electrode active material be one which does not substantially have a peak other than the diffraction peak attributed to the rock salt type layered structure. More preferably, the positive electrode active material is suitably one which has three diffraction peaks at 35 to 40° (101) and one diffraction peak at 42 to 45° (104). However, each of the diffraction peaks may not necessarily be counted as the three peaks and the one peak as long as it is attributed to the diffraction peak of the rock salt type layered structure. The measuring method to be described in Examples below is employed for the X-ray diffraction measurement. Incidentally, the notation of 64 to 65 (108)/65 to 66 (110) is intended to include a case where there are two close peaks at 64 to 65 and 65 to 66 and thus the two close peaks are not clearly separated but become one broad peak depending on the composition.

The positive electrode active material of Composition Formula (1) has a plurality of specific diffraction peaks in the X-ray diffraction (XRD) measurement. The positive electrode active material of Composition Formula above is a solid solution system of Li₂MnO₃ and LiMnO₂, and the diffraction peak at 20 to 23° is a super lattice diffraction peak that is characteristic for Li₂MnO₃ among the plurality of diffraction peaks specified above. In addition, the diffraction peaks at 36.5 to 37.5° (101), 44 to 45° (104) and 64 to 65 (108)/65 to 66 (110) are usually the peaks that are characteristic for the rock salt type layered structure of LiMnO₂. In addition, in the present embodiment, it is preferable to have three diffraction peaks at 35 to 40° (101) and one diffraction peak at 42 to 45° (104) as a part of the diffraction peaks indicating the rock salt type layered structure. It is preferable that a material which has a peak other than the diffraction peaks indicating the rock salt type layered structure, for example, another peak derived from impurities or the like in these angle ranges be not contained in the positive electrode active material of the present embodiment. The presence of such another peak means that a structure other than the rock salt type layered structure is included in the positive electrode active material. An effect of improving the cycle characteristics of the present embodiment is reliably obtained when a structure other than the rock salt type layered structure is not included.

It is considered that at least one kind of Ti, Zr and Nb is incorporated into the transition metal layer including Ni, Co and Mn by substituting Mn⁴⁺, thereby forming the rock salt type layered structure in the positive electrode active material of the present embodiment. It is considered that the crystal structure is stabilized by the incorporation of at least one kind of Ti, Zr and Nb and thus the dissolution of the transition metal including Mn is suppressed during charging and discharging. As a result, a decrease in the capacity of the cell is prevented despite repeated charge and discharge and excellent cycle characteristics can be realized. In addition, it is also possible to achieve the improvement in cell performance itself and durability. The spinel phase is usually formed when the rock salt type layered structure is changed by the dissolution of Mn and the diffraction peaks in the X-ray diffraction (XRD) measurement of the positive electrode active material represent the spinel phase. The diffraction peaks for the spinel phase appear at 35 to 36° (101) and 42.5 to 43.5° (104). It is considered that the spinel phase is not formed even after repeated charge and discharge but the rock salt type layered structure is maintained in the positive electrode active material of the present embodiment. However, the present embodiment is not limited to the consideration described above.

Moreover, it is preferable that the diffraction peaks indicating the rock salt type layered structure in the present embodiment be shifted to a lower angle side. In other words, the positive electrode active material of the present embodiment has the diffraction peaks at 20 to 23°, 35.5 to 36.5° (101), 43.5 to 44.5° (104) and 64 to 65 (108)/65 to 66 (110) in the X-ray diffraction (XRD) measurement. The shift of the diffraction peaks to a low angle side indicates that more Ti and the like are incorporated into the positive electrode active material to substitute Mn, and thus the effect of suppressing the dissolution of Mn is considered to be greater.

Furthermore, the covalent bonding between the substituting element and oxygen becomes stronger and the dislocation of oxygen in the crystal lattice associated with the oxidation of the transition metal may be diminished as Ti and the like are incorporated into the transition metal layer of the positive electrode active material by substituting Mn⁴⁺. This makes it possible to suppress the generation of oxygen gas and to decrease the oxygen defect in the crystal structure.

Here, in Composition Formula (1), a + b + c + e satisfies 1.1 ≤ [a+b+c+e] ≤ 1.4. In general, nickel (Ni), cobalt (Co) and manganese (Mn) have been known to contribute to the capacity and the output characteristics from the viewpoint of improving the purity of materials and the electron conductivity. Ti and the like substitute a part of Mn in the crystal lattice. In addition, it is possible to optimize each element and to improve the capacity and the output characteristics when 1.1 ≤ [a+b+c+e] ≤ 1.2 is satisfied. Consequently, it is possible to exert excellent initial charge and discharge efficiency while maintaining a high capacity by maintaining a high reversible capacity in the case of using a positive electrode active material which satisfies this relationship in the lithium ion secondary cell.

Incidentally, in Composition Formula (1), the values of a, b and c are not particularly limited as long as the relationship of a + b + c + d + e = 1.5 and 1.1 ≤ [a+b + c + e] ≤ 1.4 is satisfied. However, a preferably satisfies 0 < a <1.5 and more preferably 0.1 ≤ a ≤ 0.75. A secondary cell exhibiting a superior capacity retention rate is obtained when a is in the range described above. Meanwhile, nickel is contained in the positive electrode active material within the range of d described above on the condition that nickel (Ni) is divalent in a case where a does not satisfy a ≤ 0.75, and thus the crystal structure is not stabilized in some cases. On the other hand, the crystal structure of the positive electrode active material is likely to be the rock salt type layered structure in a case where a ≤ 0.75 is satisfied.

Furthermore, in Composition Formula (1), b preferably satisfies 0 < b < 1.5 and more preferably 0.2 ≤ b ≤ 0.9. A secondary cell exhibiting a superior capacity retention rate is obtained when b is in the above range. However, manganese is contained in the positive electrode active material within the range of d described above on the condition that manganese is tetravalent in a case where b does not satisfy b ≤ 0.9 and further nickel (Ni) is contained in the positive electrode active material, thus the crystal structure is not stabilized in some cases. On the other hand, the crystal structure of the positive electrode active material is likely to be the rock salt type layered structure in a case where b ≤ 0.9 is satisfied.

In addition, in Composition Formula (1), c preferably satisfies 0 ≤ c < 1.5. However, nickel and manganese are contained in the positive electrode active material within the range of d described above on the condition that cobalt is trivalent in a case where c does not satisfy c ≤ 0.6. Moreover, cobalt (Co) is contained in the positive electrode active material within the range of d described above on the condition that nickel (Ni) is divalent and manganese (Mn) is tetravalent. For this reason, the crystal structure of the positive electrode active material is not stabilized in some cases. On the other hand, the crystal structure of the positive electrode active material is likely to be the rock salt type layered structure in a case where c ≤ 0.6 is satisfied.

Moreover, in Composition Formula (1), a + b + c + d + e = 1.5 are satisfied. It is possible to stabilize the crystal structure of the positive electrode active material by satisfying this Equation.

Furthermore, in Composition Formula (1), 0.1 ≤ d ≤ 0.4 is satisfied. The crystal structure of the positive electrode active material may not be stabilized in a case where d does not satisfy 0.1 ≤ d ≤ 0.4. In contrast, the positive electrode active material is likely to be the rock salt type layered structure in a case where d satisfies 0.1 ≤ d ≤ 0.4. The range of d is more preferably 0.15 ≤ d ≤ 0.35. It is preferable that d be 0.1 or more since the composition is unlikely to be Li₂MnO₃ and thus charge and discharge are facilitated.

In addition, in Composition Formula (1), 0.1 ≤ e ≤ 0.3 is satisfied. The element cannot be uniformly incorporated into the crystal structure and thus the stabilization of crystal structure is not achieved in a case where e does not satisfy 0.1 ≤ e ≤ 0.3. On the other hand, at least one kind of Ti, Zr and Nb can substitute Mn⁴⁺ enough to suppress its dissolution when e satisfies 0.1 ≤ e ≤ 0.3.

The ionic radius of each element is as follows: Mn⁴⁺ 0.54 Å, Mn⁴⁺ 0.54 Å, Ti⁴⁺ 0.61 Å, Zr⁴⁺ 0.72 Å and Nb⁵⁺ 0.64 Å, and Ti, Zr and Nb are greater than Mn. Hence, the crystal lattice expands and the diffraction peak indicating the rock salt type layered structure shifts to a lower angle side as Mn⁴⁺ in the positive electrode active material is substituted with Ti and the like. In contrast, the amount of Mn⁴⁺ substituted with Ti and the like is greater as the diffraction peak shifts to the even lower angle side, and thus the crystal structure is easily stabilized. In other words, the dissolution of Mn during charging and discharging can be further suppressed and a decrease in the capacity of the secondary cell can be more effectively prevented.

The specific surface area of the positive electrode active material is preferably 0.2 to 0.6 m²/g and more preferably 0.25 to 0.5 m²/g. It is preferable that the specific surface area be 0.2 m²/g or more since a sufficient output of cell may be obtained. On the other hand, it is preferable that the specific surface area be 0.6 m²/g or less since the dissolution of manganese may be further suppressed. Meanwhile, in the present specification, the value measured by the method described in Examples is employed as the value of specific surface area unless otherwise stated.

The average particle size of the positive electrode active material is preferably 10 to 20 µm and more preferably 12 to 18 µm. It is preferable that the average particle size be 10 µm or more since the dissolution of manganese may be suppressed. On the other hand, it is preferable that the average particle size be 20 µm or less since the foil breakage, clogging and the like may be suppressed in the process of coating on the current collector at the time of producing the positive electrode. Meanwhile, the value determined by the particle size distribution measuring apparatus for the laser diffraction and scattering method is employed as the average particle size. The average particle size can be measured, for example, using a particle size distribution analyzer (Model LA-920) manufactured by HORIBA, Ltd.

The positive electrode active material can be prepared by a method as described below. In other words, the method includes a first process of mixing a citrate salt of at least one kind of Ti, Zr and Nb with an organic acid salt of a transition metal having a melting point of 100°C to 350°C, a second process of melting the mixture obtained in the first process at 100°C to 350°C, a third process of pyrolyzing the molten material obtained in the second process at a temperature equal to or higher than the melting point, and a fourth process of firing the pyrolysate obtained in the third process. Hereinafter, each process will be described.

### First process

In the first process, a citrate salt of at least one kind of Ti, Zr and Nb and an organic acid salt of a transition metal having a melting point of 100°C to 350°C are mixed together. The citrate salt of at least one kind of Ti, Zr and Nb is preferably mixed in the form of an aqueous solution of citrate complex. The aqueous solution of citrate complex of at least one kind of Ti, Zr and Nb can be preferably prepared as follows, but the preparation method is not limited thereto.

In other words, anhydrous citric acid is dissolved in an organic solvent such as acetone, and an alkoxide of at least one kind of Ti, Zr and Nb is added to this solution. In this case, the molar ratio of the at least one kind of Ti, Zr and Nb to citric acid is preferably that (at least one kind of Ti, Zr and Nb)/citric acid is 1/1 to 1/2. Precipitation occurs in the solution when the alkoxide is added, and the precipitate is suction filtered. Subsequently, water is added to the precipitate thus obtained, and the mixture is stirred and dissolved while heating at 50 to 60°C. The amount of water is appropriately adjusted such that the concentration of the aqueous solution of citrate complex is finally 1 to 10% by mass in terms of an oxide of at least one kind of Ti, Zr and Nb. This aqueous solution is allowed to stand for one day and the precipitate is filtered, whereby the aqueous solution of citrate complex of at least one kind of Ti, Zr and Nb is obtained as the filtrate.

Examples of the alkoxide of at least one kind of Ti, Zr and Nb may include titanium tetraisopropoxide, zirconium tetraisopropoxide, niobium isopropoxide, titanium ethoxide, titanium n-propoxide, titanium butoxide, zirconium ethoxide, zirconium n-propoxide, zirconium butoxide, niobium ethoxide, and niobium butoxide.

Next, an organic acid salt of a transition metal having a melting point of 100°C to 350°C is added to the aqueous solution of citrate complex of at least one kind of Ti, Zr and Nb thus obtained to obtain a mixture. Preferred examples of the organic acid salt of a transition metal having a melting point of 100°C to 350°C may include nickel acetate, manganese acetate, cobalt acetate, and manganese citrate.

Preferably, the above aqueous solution of citrate complex of at least one kind of Ti, Zr and Nb is further mixed with an organic acid salt of an alkali metal. Preferred examples of the organic acid salt of an alkali metal may include lithium acetate and lithium citrate. It is preferable that the organic acid salt of an alkali metal be mixed in this stage since the production method is simple.

### Second process

The mixture obtained in the first process is melted at 100°C to 350°C and preferably at 200°C to 300°C.

### Third process

The molten material (slurry) obtained in the second process is pyrolyzed at a temperature equal to or higher than the melting point of the organic acid salt of a transition metal used in the first process to obtain a pyrolysate of dry powder. The pyrolysis is performed at a temperature equal to or higher than the highest melting point in a case where the melting points of the plurality of organic acid salts of transition metals are different from one another. In more detail, the molten material can be heated and sprayed at 200°C to 600°C and more preferably at 200°C to 400°C using a spray device.

### Fourth process

The pyrolysate obtained in the third process is fired at 600°C to 1200°C and more preferably at 800°C to 1100°C for 5 to 20 hours and preferably for10 to 15 hours. Prefiring may be performed before the firing. In that case, the prefiring can be performed at 200°C to 700°C and more preferably at 300°C to 600°C for 1 to 10 hours and more preferably for 2 to 6 hours. In this manner, the positive electrode active material of the present embodiment can be obtained.

### Conductive auxiliary

The conductive auxiliary refers to an additive to be blended in order to improve the electrical conductivity of the active material layer. The electronic network is effectively formed inside the positive electrode active material layer and the output characteristics of the cell can be improved as the positive electrode active material layer contains an electrical conducting material.

The conductive auxiliary is not particularly limited, but examples thereof may include carbon powder such as acetylene black, carbon black, channel black, thermal black, Ketjen black and graphite, various kinds of carbon fibers such as vapor grown carbon fiber (VGCF; registered trademark), and expanded graphite.

The content of the conductive auxiliary is usually 0 to 30% by mass, preferably 1 to 10% by mass, and even more preferably 3 to 7% by mass with respect to the total amount of the positive electrode active material layer.

### Binder

The binder is added for the purpose of maintaining the electrode structure by binding the constituent members in the active material layer or the active material layer and the current collector.

The binder is not particularly limited, but examples thereof may include polyvinylidene fluoride (PVdF), carboxymethylcellulose (CMC), polytetrafluoroethylene (PTFE), polyvinyl acetate, an acrylic resin, polyimide, an epoxy resin, a polyurethane resin, a urea resin, and a synthetic rubber-based binder such as styrene-butadiene rubber (SBR).

The content of the binder is usually 0 to 50% by mass, preferably 5 to 45% by mass, even more preferably 10 to 25% by mass, and particularly preferably 15 to 20% by mass with respect to the total amount of the positive electrode active material layer.

### [Negative electrode]

The negative electrode has a function to generate electrical energy by receiving and releasing a lithium ion together with the positive electrode. The negative electrode essentially includes a current collector and a negative electrode active material layer and is fabricated by forming the negative electrode active material layer on the surface of the current collector.

### (Current collector)

The current collector usable in the negative electrode is the same as the current collector usable in the positive electrode, and thus the description thereof is omitted here.

### (Negative electrode active material layer)

The negative electrode active material layer contains a negative electrode active material. The negative electrode active material layer may further contain additives such as a conductive auxiliary and a binder.

### Negative electrode active material

The negative electrode active material has a composition that can release a lithium ion at the time of discharge and occlude the lithium ion at the time of charge. The negative electrode active material is not particularly limited as long as it can reversibly occlude and release lithium, but preferred examples of the negative electrode active material may include a metal such as Si and Sn, or a metal oxide such as TiO, Ti₂O₃ and TiO₂ or SiO₂, SiO and SnO₂, a composite oxide of lithium and a transition metal such as Li_{4/3}Ti_{5/3}O₄ or Li₇MnN, a Li-Pb based alloy, a Li-Al based alloy, Li, or a carbon material such as carbon powder, natural graphite, artificial graphite, carbon black, activated carbon, carbon fiber, coke, soft carbon or hard carbon. It is possible to obtain a cell which has a higher energy density than a carbon-based material of the related art and thus exhibits a high capacity and excellent output characteristics by using an element to be alloyed with lithium among these. The negative electrode active materials described above may be used singly or in the form of a mixture of two or more kinds. Specific examples of the element to be alloyed with lithium described above may include Si, Ge, Sn, Pb, Al, In, Zn, H, Ca, Sr, Ba, Ru, Rh, Ir, Pd, Pt, Ag, Au, Cd, Hg, Ga, Tl, C, N, Sb, Bi, O, S, Se, Te and Cl but are not limited thereto.

Among the negative electrode active materials described above, it is preferable to contain a carbon material and/or at least one or more kinds or elements selected from the group consisting of Si, Ge, Sn, Pb, Al, In and Zn, it is more preferable to contain a carbon material and an element of Si or Sn, and it is particularly preferable to use a carbon material.

As the carbon material, carbonaceous particles which exhibit a lower discharge potential compared with lithium are preferable and it is possible to use, for example, natural graphite, artificial graphite, a blend of natural graphite and artificial graphite, a material obtained by coating natural graphite with an amorphous substance, soft carbon and hard carbon. The shape of the carbonaceous particles is not particularly limited and may be any shape such as a massive shape, a spherical shape and a fibrous shape, but it is preferable that the shape be not flaky but is spherical and massive. Those which are not flaky are preferable from the viewpoint of performance and durability.

In addition, the carbonaceous particles are preferably those obtained by covering their surface with amorphous carbon. In this case, the amorphous carbon more preferably covers the entire surface of the carbonaceous particles but may cover only a part of the surface. It is possible to prevent the reaction between graphite and the electrolytic solution at the time of charging and discharging the cell as the surface of the carbonaceous particles is covered with amorphous carbon. The method to cover the surface of graphite particles with amorphous carbon is not particularly limited. Examples thereof may include a wet method in which carbonaceous particles (powder) to be the core are dispersed and mixed in a mixed solution prepared by dissolving or dispersing amorphous carbon in a solvent and the solvent is then removed therefrom. In addition, a vapor phase method such as a CVD method and a dry method in which carbonaceous particles and amorphous carbon are mixed together in a solid state and mechanical energy is applied to the mixture so as to cover the amorphous carbon is exemplified. It is possible to confirm that the carbonaceous particles are covered with amorphous carbon by a method such as laser spectroscopy.

The BET specific surface area of the negative electrode active material is preferably 0.8 to 1.5 m²/g. The cycle characteristics of the non-aqueous electrolyte secondary cell may be improved when the specific surface area is in the above range. Moreover, the tap density of the negative electrode active material is preferably 0.9 to 1.2 g/cm³. It is preferable that the tap density be in the above range from the viewpoint of energy density.

The average particle size of the negative electrode active material is not particularly limited but is preferably 1 to 100 µm and more preferably 1 to 20 µm from the viewpoint of a higher capacity, the reactivity and the cycle durability of the negative electrode active material.

### Conductive auxiliary

The conductive auxiliary usable in the negative electrode is the same as the conductive auxiliary usable in the positive electrode, and thus the description thereof is omitted here.

### Binder

The binder usable in the negative electrode is the same as the binder usable in the positive electrode, and thus the description thereof is omitted here.

### [Electrolyte layer]

The electrolyte layer functions as a spatial partition (spacer) between the positive electrode and the negative electrode. In addition, in conjunction with this, it also has a function to retain the electrolyte that is a moving medium of the lithium ions between the positive and negative electrodes at the time of charge and discharge. The electrolyte that constitutes the electrolyte layer is not particularly limited, and a liquid electrolyte and a polymer electrolyte such as a polymer gel electrolyte and a solid polymer electrolyte may be appropriately used. In the present embodiment, a liquid electrolyte is preferable.

The liquid electrolyte has a form in which a lithium salt is dissolved in an organic solvent. Examples of the organic solvent may include at least one kind of dimethyl carbonate (DMC), diethyl carbonate (DEC), dipropyl carbonate (DPC), methylpropyl carbonate (MPC), ethyl propyl carbonate (EPC), methyl ethyl carbonate (MEC), ethylene carbonate (EC), propylene carbonate (PC), butylene carbonate (BC), fluorine-containing cyclic carbonate (fluoroethylene carbonate (FEC) and the like), fluorine-containing chain carbonate, fluorine-containing chain ether, and fluorine-containing chain ester.

In addition, as the lithium salt, it is preferable to use at least LiPF6. It is possible to use LiN(SO₂C₂F₅)₂, LiN(SO₂CF₃)₂, LiBF₄, LiClO₄, LiAsF₆ and LiSO₃CF₃ other than this. The concentration of the lithium salt is preferably 0.1 to 5 mol/L and more preferably 0.1 to 2 mol/L.

Furthermore, in the case of a liquid electrolyte, it is preferable to contain at least one kind of an organic sulfone compound, an organic disulfone compound, a vinylene carbonate derivative, an ethylene carbonate derivative, an ester derivative, a dihydric phenol derivative, a terphenyl derivative, a phosphate derivative and a lithium fluorophosphate derivative as an additive. Among these, a lithium fluorophosphate derivative such as lithium monofluorophosphate and lithium difluorophosphate is more preferable. The use of these additives is preferable from the viewpoint of performance and lifetime characteristics. The additive is contained preferably at 0.1 to 5% by mass and more preferably at 0.5 to 3.5% by mass in the electrolytic solution.

On the other hand, the polymer electrolyte is classified into a gel electrolyte that contains an electrolytic solution and a solid polymer electrolyte that does not contain an electrolytic solution.

The gel electrolyte has a configuration in which the above liquid electrolyte is injected to a matrix polymer exhibiting lithium ion conductivity. Examples of the matrix polymer exhibiting lithium ion conductivity may include polyethylene oxide (PEO), polypropylene oxide (PPO), and a copolymer of these. An electrolytic salt such as a lithium salt may readily dissolve in such a matrix polymer.

Incidentally, a separator may be used in the electrolyte layer in a case where the electrolyte layer includes a liquid electrolyte or gel electrolyte. Examples of a specific form of the separator may include a microporous membrane formed of a hydrocarbon such as polyolefin including polyethylene or polypropylene or polyvinylidene fluoride-hexafluoropropylene (PVdF-HFP) and a glass fiber.

The solid polymer electrolyte has a configuration in which a lithium salt is dissolved in the above matrix polymer and does not contain an organic solvent. Hence, there is no concern of liquid leakage from the cell and thus the reliability of the cell may be improved in a case where the electrolyte layer includes a solid polymer electrolyte.

The matrix polymer of the polymer gel electrolyte and solid polymer electrolyte may exhibit excellent mechanical strength by forming a cross-linked structure. It is possible to subject a polymerizable polymer (for example, PEO or PPO) for polymer electrolyte formation to a polymerization treatment such as a thermal polymerization, an ultraviolet polymerization, a radiation polymerization and an electron beam polymerization using a suitable polymerization initiator in order to form a cross-linked structure. Meanwhile, the above electrolyte may be contained in the active material layer of the electrode.

### [Current collector plate (tab)]

In the lithium ion secondary cell, a current collector plate (tab) that is electrically connected to the current collector is taken out of the laminate film as an exterior material for the purpose of drawing the current to the outside of the cell.

The material constituting the current collector plate is not particularly limited and a known highly electrical conducting material which is used in the related art as a current collector plate for lithium ion secondary cell may be used. Preferred examples of the constituent material of the current collector plate may include a metal material such as aluminum, copper, titanium, nickel, stainless steel (SUS) and an alloy thereof. The material is more preferably aluminum and copper and particularly preferably aluminum from the viewpoint of lightweight, corrosion resistance and high electrical conductivity. Meanwhile, the same material or different materials may be used in the positive electrode current collector plate (positive electrode tab) and the negative electrode current collector plate (negative electrode tab).

### [Seal portion]

The seal portion is a unique member for the series laminate type cell and has a function to prevent the leakage of electrolyte layer. It is also possible to prevent the contact between adjacent current collectors in the cell or the short circuit caused by slight lack of uniformity of the ends of the laminated electrodes in addition to this.

The constituting material for the seal portion is not particularly limited and a polyolefin resin such as polyethylene and polypropylene, an epoxy resin, rubber, polyimide and the like may be used. Among these, it is preferable to use a polyolefin resin from the viewpoint of corrosion resistance, chemical resistance, film forming property, economic efficiency and the like.

### [Positive electrode terminal lead and negative electrode terminal lead]

A known lead used in a laminate type secondary cell can be used as the material of the negative electrode and positive electrode terminal leads. Meanwhile, it is preferable to cover the part taken out from the exterior material for cell with a thermal shrinkable tube exhibiting heat resistance and insulation so as not to affect the product (for example, automobile parts and especially electronic devices) by contact with a peripheral device or a wire causing the leakage of electricity.

### [Exterior material; laminate film]

As the exterior material, it is possible to use a metal can case known in the related art. In addition, it is also possible to pack the power generating element 17 using the laminate film 22 illustrated in Fig. 1 as the exterior material. The laminate film may be configured as a three-layer structure formed by laminating, for example, polypropylene, aluminum and nylon in this order. The use of such a laminate film makes it possible to easily perform opening of the exterior material, addition of a capacity recovery material and resealing of the exterior material.

### [Method for producing non-aqueous electrolyte secondary cell]

The method for producing a non-aqueous electrolyte secondary cell is not particularly limited, and the non-aqueous electrolyte secondary cell may be produced by a known method. Specifically, the method includes (1) fabrication of the electrodes, (2) fabrication of the single cell layer, (3) fabrication of the power generating element, and (4) production of the laminate type cell. Hereinafter, the method for producing a non-aqueous electrolyte secondary cell will be described by taking an example but is not limited thereto.

### (1) Fabrication of electrode (positive electrode and negative electrode)

The electrode (positive electrode or negative electrode) may be fabricated, for example, by preparing an active material slurry (positive electrode active material slurry or negative electrode active material slurry), coating the active material slurry on a current collector, and drying and then pressing the resultant. The active material slurry contains the active material (positive electrode active material or negative electrode active material) described above and a solvent. In addition, it may further contain a conductive auxiliary and a binder. The positive electrode active material slurry essentially contains the positive electrode active material having a specific composition and a specific structure described above, and thus the present embodiment also provides a positive electrode.

The solvent is not particularly limited, and N-methyl-2-pyrrolidone (NMP), dimethylformamide, dimethylacetamide, methylformamide, cyclohexane, hexane, water and the like may be used.

The method for coating the active material slurry on the current collector is not particularly limited, and examples thereof may include a screen printing method, a spray coating method, an electrostatic spray coating method, an ink jet method and a doctor blade method.

The method for drying the coating film formed on the surface of the current collector is not particularly limited as long as at least a part of the solvent in the coating film is removed. Examples of the drying method may include heating. The drying conditions (drying time, drying temperature and the like) may be appropriately set depending on the volatilization rate of the solvent contained in the active material slurry to be applied, the coating amount of the active material slurry and the like. Incidentally, a part of the solvent may remain. The remained solvent may be removed in the pressing process or the like to be described below.

The pressing means is not particularly limited, and for example, a calender roll, a flat press and the like may be used.

### (2) Fabrication of single cell layer

The single cell layer may be fabricated by laminating the electrodes (positive electrode and negative electrode) fabricated in (1) via an electrolyte layer.

### (3) Fabrication of power generating element

The power generating element may be fabricated by laminating the single cell layers in appropriate consideration of the output and capacity of the single cell layer, and the output, capacity and the like required as a cell.

### (4) Production of laminate type cell

As the configuration of the cell, it is possible to employ various kinds of shapes such as a square shape, a paper type, a laminate type, a cylindrical type and a coin type. In addition, the current collector, an insulating plate and the like of the constituent components are not particularly limited and may be selected according to the above shape. However, a laminate type cell is preferred in the present embodiment. In the laminate type cell, the lead is joined to the current collector of the power generating element obtained above and this positive electrode lead or negative electrode lead is joined to the positive electrode tab or the negative electrode tab. Thereafter, the power generating element is introduced into the laminate sheet such that the positive electrode tab and the negative electrode tab are exposed to the outside of the cell, the electrolytic solution is injected by a injecting machine, and the laminate sheet is sealed in a vacuum, whereby the laminate type cell can be produced.

### Examples

Hereinafter, the present embodiment will be specifically described through Examples, but the present embodiment is not limited to the following Examples.

### [Example 1]

### (Preparation of aqueous solution of titanium citrate complex)

To 400 ml of acetone, 60 g (0.3 mol) of anhydrous citric acid (molecular weight: 192.12 g/mol) was added and dissolved by heating at 60°C. Subsequently, 56 g (0.2 mol) of titanium tetraisopropoxide (molecular weight: 284.22 g/mol) was added to the mixture so as to cause precipitation. This solution was suction filtered to obtain a precipitate (pale yellow).

The precipitate was added to H₂O (200 ml) and dissolved by heating at 50 to 60°C. This solution was allowed to stand for one or more days to settle the insoluble matter and then filtered to remove the insoluble matter, thereby obtaining an aqueous solution of titanium citrate complex. The concentration of Ti was 5.0% by weight as TiO₂ (molecular weight: 79.87 g/mol).

### (Preparation of positive electrode active material C1)

Li_{1.5}[Ni_{0.375}Mn_{0.775}[Li]_{0.25}Ti_{0.10}]O_{z}

To 15.97 g of the aqueous solution of titanium citrate complex (5.0% by weight as TiO₂) 15.93 g of manganese acetate tetrahydrate (molecular weight: 245.09 g/mol), 6.22 g of nickel acetate tetrahydrate (molecular weight: 248.84 g/mol) and 15.31 g of lithium acetate dihydrate (molecular weight: 102.02 g/mol) were added in order. The mixture thus obtained was heated to 200 to 300°C to melt and dissolve. Next, the molten solution (slurry) thus obtained was heated and sprayed at 200 to 400°C using a spray drying device and dried. The dry powder thus obtained was prefired at 600°C for 4 hours and then fired at 900°C for 12 hours.

The composition of the positive electrode active material C1 obtained as described above was as follows.

Composition Formula: Li_{1.5}[Ni_{0.375}Mn_{0.775}[Li]_{0.25}Ti_{0.10}]O_{z}

a + b + c + d + e = 1.5, d = 0.25, a + b + c + e = 1.25, and e = 0.1

### (X-ray diffraction measurement)

The crystal structure and crystallinity of the positive electrode active material thus obtained was evaluated by X-ray diffraction. The Cu-Kα ray was used as the X-ray source, and the measurement conditions were as follows. Tube voltage: 40 KV, tube current: 20 mA, scanning speed: 2°/min, divergence slit width: 0.5° and light-receiving slit width: 0.15°.

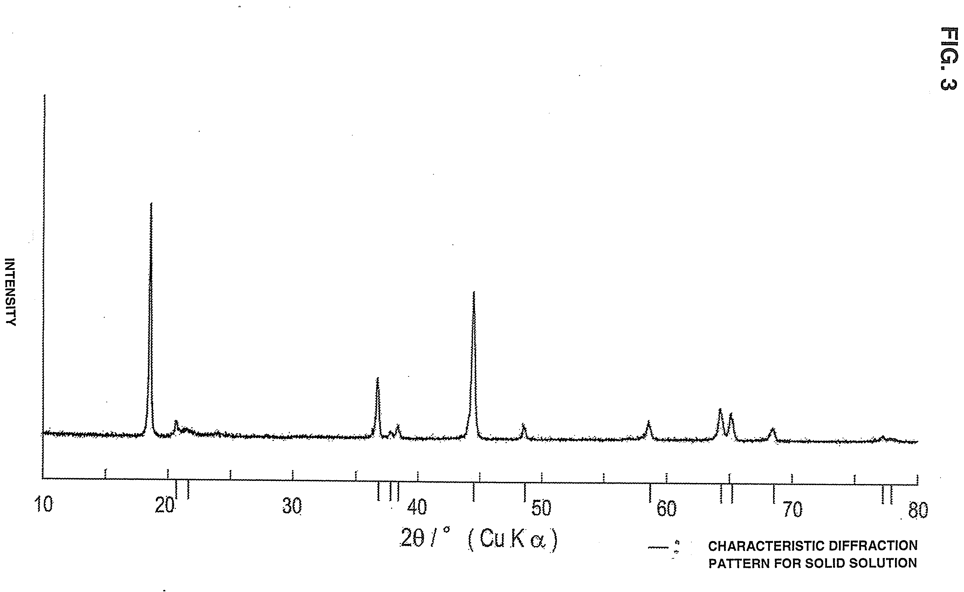

The X-ray diffraction pattern of the positive electrode active material C0 which does not contain Ti and has the following composition is illustrated in Fig. 3 for comparison.

Composition Formula: Li_{1.5}[Ni_{0.375}Mn_{0.875}[Li]_{0.25}Ti_{0.00}]O_{z}

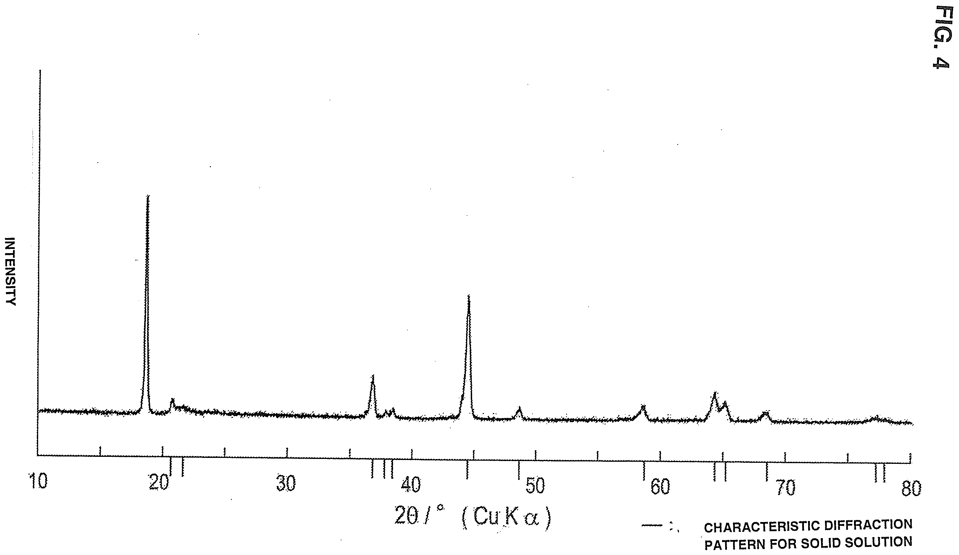

Furthermore, the X-ray diffraction pattern of the positive electrode active material C1 is illustrated in Fig. 4.

In Figs. 3 and 4, a peak attributed to the super lattice structure that is characteristic for the solid solution system is confirmed at 20 to 23°. Furthermore, it was observed in Fig. 4 that the peaks at 36.5 to 37.5° (101) and 44 to 45° (104) and 64 to 65° (108)/65 to 66 (110) slightly shifted to a lower angle side. In addition, the diffraction peak attributed to the spinel phase was not confirmed in any samples.

### (Fabrication of positive electrode C11)

### (Composition of slurry for positive electrode)

The slurry for positive electrode had the following composition.

Positive electrode active material C1: Composition Formula:

Li_{1.5}[Ni_{0.375}Mn_{0.775}[Li]_{0.25}Ti_{0.10}]O_{z} 100 parts by weight

Conductive agent: flaky graphite 1.0 parts by weight
Acetylene black 3.0 parts by weight
Binder: polyvinylidene fluoride (PVDF) 3.0 parts by weight and
Solvent: N-methylpyrrolidone (NMP) 65 parts by weight.

### (Preparation of positive electrode slurry)

The slurry for positive electrode having the above composition was prepared as follows. First, a binder solution was prepared by dissolving 3.0 parts by weight of the binder in 30 parts by weight of NMP. Next, 33.0 parts by weight of the above binder solution was added to the mixed powder of 4.0 parts by weight of the conductive agent and 100 parts by weight of the positive electrode active material powder, and the resultant was kneaded by a planetary mixer (PVM100 manufactured by ASADA IRON WORKS, CO., LTD.), and then 35 parts by weight of NMP was added to the kneaded product, thereby obtaining the slurry for positive electrode (solid matter concentration: 62% by weight).

### (Coating and drying of slurry for positive electrode)

The above slurry for positive electrode was coated on one surface of the current collector foil using a die coater while traveling the current collector foil formed of a 20 µm thick aluminum foil at a traveling speed of 1 m/min. Subsequently, the current collector foil coated with this positive electrode slurry was dried (100 to 110°C, drying time: 3 minutes) using a hot air drying furnace so as to diminish the amount of NMP remaining in the electrode active material layer to 0.02% or less by weight. Furthermore, the back surface of the aluminum foil was also coated and dried in the same manner as above, thereby forming a sheet-shaped electrode having an electrode active material layer on both surfaces.

### (Press of electrode)

The sheet-shaped electrode was compression-molded using a roller press and cut, thereby fabricating the positive electrode C1 having a weight of the active material layer of one surface of about 11.0 mg/cm², a thickness of about 50 µm and a density of 2.70 g/cm³.

### (Drying of electrode)

Next, this positive electrode C1 was subjected to a drying treatment by a vacuum drying furnace. The positive electrode C1 was placed inside the vacuum drying furnace and the pressure was then reduced (100 mmHg and (1.33 x 104 Pa)) at room temperature (25°C) so as to remove the air in the vacuum drying furnace. Subsequently, the temperature was raised to 120°C at 10°C/min while circulating a nitrogen gas (100 cm³/min), the pressure was reduced again at 120°C so as to evacuate nitrogen in the furnace, and the state was retained for 12 hours, and the temperature was lowered to room temperature. A positive electrode C11 was obtained in this manner.

### [Negative electrode]

### (Composition of slurry for negative electrode)

The negative electrode slurry had the following composition.

Active material: natural graphite 100 parts by weight
Conductive agent: acetylene black 1.0 parts by weight
Binder: polyvinylidene fluoride (PVDF) 5.0 parts by weight and
Solvent: N-methylpyrrolidone (NMP) 97 parts by weight

### (Preparation of negative electrode slurry)

The slurry for negative electrode having the above composition was prepared as follows. First, a binder solution was prepared by dissolving 5.0 parts by weight of the binder in 50 parts by weight of NMP. Next, 55.0 parts by weight of the above binder solution was added to the mixed powder of 1.0 part by weight of the conductive agent and 100 parts by weight of the natural graphite powder, and the resultant was kneaded by a planetary mixer (PVM100 manufactured by ASADA IRON WORKS, CO., LTD.), and then 47 parts by weight of NMP was added to the kneaded product, thereby obtaining the slurry for negative electrode (solid matter concentration: 52% by weight). Incidentally, it was confirmed that the shape of the negative electrode active material was not flaky by SEM. The specific surface area was 1.05 m²/g (measuring device: BELSORP-minill manufactured by BEL Japan, Inc.) and the tap density was 1.1 g/cm³ (measuring device: tap density measuring device manufactured by Nihon Rufuto Co., Ltd.).

### (Coating and drying of slurry for negative electrode)

With regard to the coating amount (mg/cm²) for negative electrode, the coating weight for one surface was about 9.50 mg/cm². The above slurry for negative electrode was coated on one surface of the current collector foil using a die coater while traveling the current collector foil formed of a 10 µm thick electrolytic copper foil at a traveling speed of 1.5 m/min. Subsequently, the current collector foil coated with this negative electrode slurry was dried at 100 to 110°C for a drying time of 2 minutes using a hot air drying furnace so as to diminish the amount of NMP remaining in the electrode active material layer to 0.02% by weight or less. Furthermore, the back surface of the electrolytic copper foil was also coated and dried in the same manner as above, thereby forming a sheet-shaped electrode having an electrode active material layer on both surfaces.

### (Press of electrode)

The sheet-shaped electrode thus obtained was compression-molded using a roller press and cut, thereby fabricating the negative electrode A1 having a weight of the active material layer of one surface of about 9.50 mg/cm² and a density of 1.45 g/cm³. The occurrence of cracks was not observed on the surface of the negative electrode A1.

### (Drying of electrode)

Next, the negative electrode A1 fabricated by the above procedure was subjected to a drying treatment by a vacuum drying furnace. The negative electrode A1 was placed inside the vacuum drying furnace and the pressure was then reduced (100 mmHg and (1.33 x 10⁴ Pa)) at room temperature (25°C) so as to remove the air in the vacuum drying furnace. Subsequently, the temperature was raised to 135°C at 10°C/min while circulating a nitrogen gas at 100 cm³/min, the pressure was reduced again at 135°C so as to evacuate nitrogen in the furnace, and the state was retained for 12 hours, and the temperature was lowered to room temperature. The negative electrode A11 was obtained in this manner.

### [Fabrication of cell]

A tab was welded to the current collector foil part of the positive electrode C11 (active material layer area: vertical 3.6 cm x horizontal 5.3 cm) and the negative electrode A11 (active material layer area: vertical 3.8 cm x horizontal 5.5 cm). A porous polypropylene separator (S) (vertical 4.5 cm x horizontal 6.0 cm, thickness: 25 µm and porosity: 55%) was sandwiched between these negative electrode A11 and positive electrode C11 to which the tabs were welded, whereby a laminate type cell element consisting of five layers (laminating example: A11-(S)-C11-(S)-A11) was fabricated. Subsequently, the both sides were sandwiched with an aluminum laminate film (vertical 5.0 cm x horizontal 6.5 cm) and the three sides were thermocompression sealed so as to house the above cell element.

In the mixed solvent of 30 vol.% of ethylene carbonate (EC) and 70 vol.% of diethyl carbonate (DEC), 1.0 mol/liter of LiPF₆ (electrolyte) was dissolved and 1.8% by weight of lithium difluorophosphate (LiPO₂F₂) and 1.0% by weight of lithium monofluorophosphate (Li₂PO₃F) were dissolved therein as a lithium fluorophosphate to act as an additive, thereby obtaining the electrolytic solution. This electrolytic solution was injected into the cell element at 0.6 cm³/cell and the remained one side was then temporarily sealed by thermocompression bonding, thereby fabricating a laminate type cell. The laminate type cell was retained for 24 hours at 25°C while pressurizing at a surface pressure of 0.5 Mpa in order to sufficiently permeate the electrolytic solution into the electrode pores.

Thereafter, the cell element was placed on the evaluated cell attachment jig, the positive electrode lead and the negative electrode lead were attached to each tab end of the cell element, and the test was performed.

### [Evaluation on cell characteristics]

The cell fabricated in Example 21 was subjected to the initial charging treatment and the activation treatment under the following conditions, and the performance was evaluated.

### [Initial charging treatment]

The aging treatment of the cell was performed as follows. The cell was charged (SOC about 20%) at 25°C and 0.05 C for 4 hours by a constant current charging method. Subsequently, charge was performed at 25°C and a 0.1 C rate until to reach 4.35 V and then stopped, and the cell was retained in that state (SOC about 70%) for about two days (48 hours).

### [Gas removing treatment 1]

The one side of the cell that was temporarily sealed by thermocompression bonding was open, the gas was removed therefrom at 10 ± 3 hPa for 5 minutes, and the cell was temporarily sealed again by thermocompression bonding. Moreover, the cell was pressurized (surface pressure: 0.5 ± 0.1 MPa) and shaped by a roller so as to bring the electrode into sufficiently close contact with the separator.

### [Activation treatment]

A cycle to charge the cell at 25°C and 0.2 C by a constant current charging method until to reach 4.45 V and to discharge at 0.2 C until to reach 2.0 V was repeated two times and a cycle to charge the cell at 0.2 C until to reach 4.55 V and to discharge at 0.2 C until to reach 2.0 V was repeated two times.

### [Gas removing treatment 2]

The one side of the cell that was temporarily sealed by thermocompression bonding was open, the gas was removed therefrom at 10 ± 3 hPa for 5 minutes, and the cell was final-sealed again by thermocompression bonding. Moreover, the cell was pressurized (surface pressure: 0.5 ± 0.1 MPa) and shaped by a roller so as to bring the electrode into sufficiently close contact with the separator.

### [Performance evaluation]

With regard to the evaluation of cell, the charge was performed by a constant current and constant voltage charging method to charge the cell at a 0.1 C rate until the maximum voltage reached 4.5 V and to retain for about 1 to 1.5 hours, and the discharge was performed by a constant current discharging method to discharge the cell at a 0.1 C rate until the minimum voltage reached 2.0 V. Both of them were performed at room temperature.

### [Lifetime evaluation]

The lifetime test of the cell was performed by repeating the above charge and discharge at a 1.0 C rate 300 cycles at 45°C. With regard to the evaluation of cell, the charge was performed by a constant current and constant voltage charging method to charge the cell at a 0.1 C rate until the maximum voltage reached 4.5 V and to retain for about 1 to 1.5 hours, and the discharge was performed by a constant current discharging method to discharge the cell at a 0.1 C rate until the minimum voltage reached 2.0 V. Both of them were performed at room temperature.

The proportion of the discharge capacity of the 300th cycle to the discharge capacity of the first cycle was defined as the capacity retention rate and the comparison was performed. In addition, the proportion of the direct current resistance (DCR) of the 300th cycle to the DCR of the first cycle was defined as the DCR increase rate and the comparison was performed.

### [Example 2]

### (Preparation of positive electrode active material C2)

Li_{1.5}[Ni_{0.375}Mn_{0.775}[Li]_{0.25}Ti_{0.10}]O_{z}

To 15.97 g of the aqueous solution of titanium citrate complex (5.0% by weight as TiO₂) obtained in the same manner as in Example 1, 15.93 g of manganese acetate tetrahydrate (molecular weight: 245.09 g/mol), 6.22 g of nickel acetate tetrahydrate (molecular weight: 248.84 g/mol) and lithium acetate dihydrate (molecular weight: 102.02 g/mol) of the amount (15.46 g) to be 1.01 times 15.31 g were added in order. The mixture thus obtained was heated to 200 to 300°C to melt and dissolve. Next, the molten solution (slurry) thus obtained was heated and sprayed at 200 to 400°C using a spray drying device and dried. The dry powder thus obtained was prefired at 600°C for 4 hours and then fired at 900°C for 12 hours. To 100 ml of pure water, 10 g of the fired powder was added and mixed by stirring for 2 minutes, and the mixture was then quickly suction filtered. The filtered product was dried at 200°C and then fired at 400°C for 1 hour.

The composition of the positive electrode active material C2 which obtained as described above was as follows.

Composition Formula: Li_{1.5}[Ni_{0.375}Mn_{0.775}[Li]_{0.25}Ti_{0.10}]O_{z}

a + b + c + d + e = 1.5, d = 0.25, a + b + c + e = 1.25, and e = 0.1

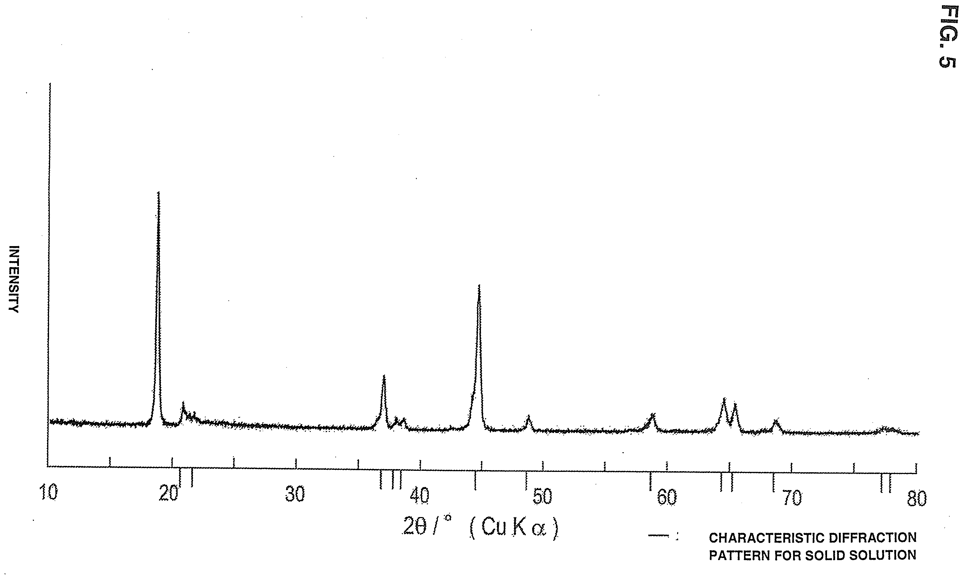

The X-ray diffraction pattern of the positive electrode active material C2 is illustrated in Fig. 5. In the X-ray diffraction pattern, the same peaks as the positive electrode active material C1 of Example 1 were observed. In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Example 3]

A positive electrode active material C3 was prepared in the same manner as in Example 2. In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Examples 4 and 5]

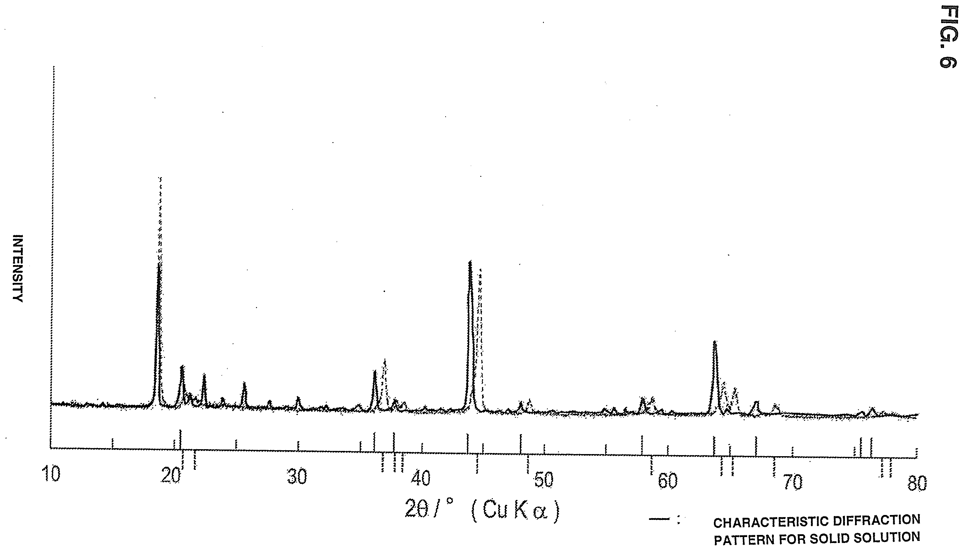

Positive electrode active materials C4 and C5 were prepared in the same manner as in Example 2 except that the introduced amount of lithium acetate was 1.05 times the amount in Example 2. The X-ray diffraction pattern of the positive electrode active material C4 is illustrated in Fig. 6 by a solid line. For comparison, the pattern of the positive electrode active material C1 of Example 1 is illustrated in Fig. 6 by a solid line. In the positive electrode active material C4, the shift of the peaks to a lower angle side was observed: from 36.5 to 37.5° (101) to 35.5 to 36.5° (101) and from 44 to 45° (104) to 43.5 to 44.5° (104). Moreover, a tendency was observed that the peaks at 64 to 65° (108)/65 to 66 (110) overlap to be one. It is considered this is because the incorporated amount of titanium has increased in the positive electrode active material C4.

In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Reference Examples 6 and 7, Example 8]

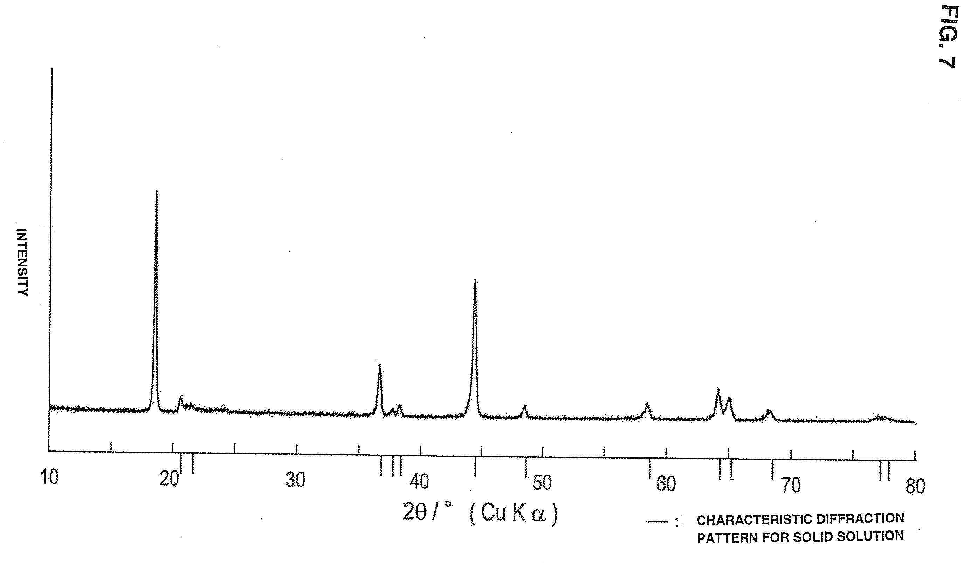

Positive electrode active materials C6 to C8 were prepared in the same manner as in Example 2 except that the introduced amount of lithium acetate was 1.10 times the amount in Example 2. The X-ray diffraction pattern of the positive electrode active material C7 is illustrated in Fig. 7. In the X-ray diffraction pattern, the same peaks as the positive electrode active material C1 of Example 1 were observed. In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Example 9]

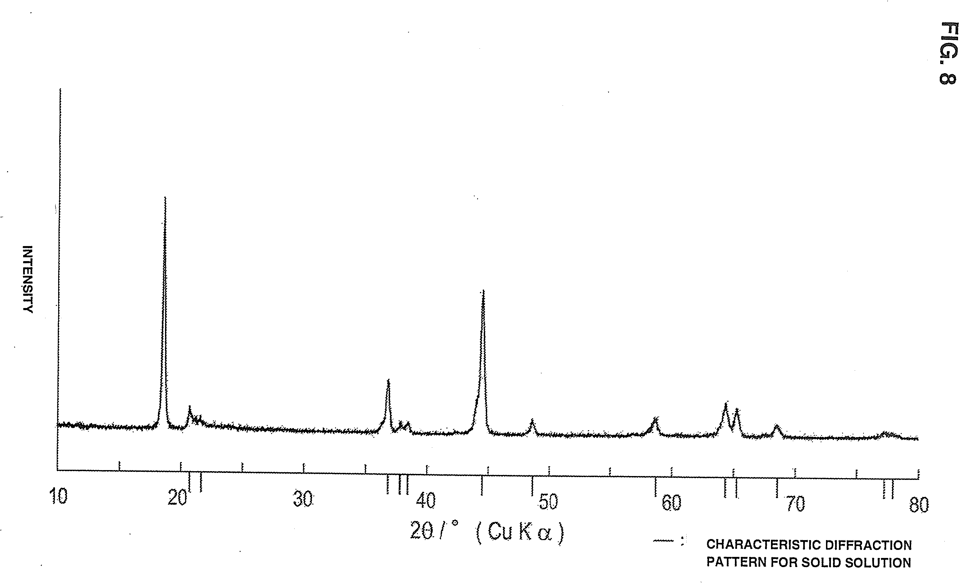

A positive electrode active material C9 was prepared in the same manner as in Example 2 except that the introduced amount of lithium acetate was 1.05 times the amount in Example 2. The X-ray diffraction pattern of the positive electrode active material C9 is illustrated in Fig. 8. In the X-ray diffraction pattern, the same peaks as the positive electrode active material C1 of Example 1 were observed. In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Example 10]

### (Preparation of aqueous solution of titanium citrate complex)

With about 2.5 g of metallic titanium powder (350 mesh), 200 ml of 30% hydrogen peroxide and 50 ml of 30% aqueous ammonia were mixed (molar ratio of metallic titanium : hydrogen peroxide : ammonia = 1 : 34 : 17) and dissolved while cooling in a water bath so as to obtain a yellow transparent titanium peroxo solution. Anhydrous citric acid was added to the solution thus obtained at a mole to be 1.1 times 1 mol of titanium and dissolved while heating at 60°C, thereby obtaining an aqueous solution of titanium citrate complex. The concentration of Ti was 5.0% by weight as TiO₂.

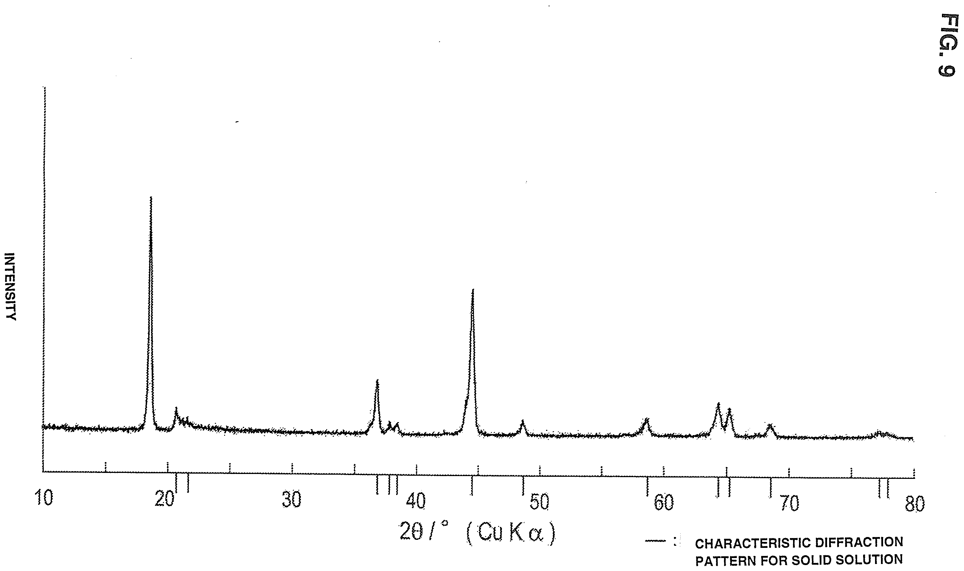

A positive electrode active material C10 was prepared in the same manner as in Example 9 except using the titanium citrate thus obtained. The X-ray diffraction pattern of the positive electrode active material C10 is illustrated in Fig. 9. In the X-ray diffraction pattern, the same peaks as the positive electrode active material C1 of Example 1 were observed.

In addition, the cell for evaluation was fabricated in the same manner as in Example 1 and subjected to the initial charging treatment and the activation treatment, and the performance evaluation and the lifetime evaluation were performed. The results of evaluation are presented in Tables 1 and 3 to be described below.

### [Example 11]

### (Preparation of aqueous solution of zirconium citrate complex)

To 400 ml of acetone, 60 g (0.3 mol) of anhydrous citric acid (molecular weight: 192.12 g/mol) was added and dissolved by heating at 60°C. Subsequently, 77.53 g (0.2 mol) of zirconium tetraisopropoxide (molecular weight: 387.67 g/mol) was added to the mixture so as to cause precipitation. This solution was suction filtered to obtain a precipitate (pale yellow). The precipitate was added to H₂O (200 ml) and dissolved by heating at 50 to 60°C. The solution thus obtained was allowed to stand for one or more days to settle the insoluble matter and then filtered to remove the insoluble matter, thereby obtaining an aqueous solution of zirconium citrate complex. The concentration of Zr was 5.0% by weight as ZrO₂.

The positive electrode active material C11 having the following composition was prepared in the same manner as in Example 9 except using the aqueous solution of zirconium citrate complex instead of the aqueous solution of titanium citrate complex.

Composition Formula: Li_{1.5}[Ni_{0.375}Mn_{0.775}[Li]_{0.25}Zr_{0.10}]O_{z}

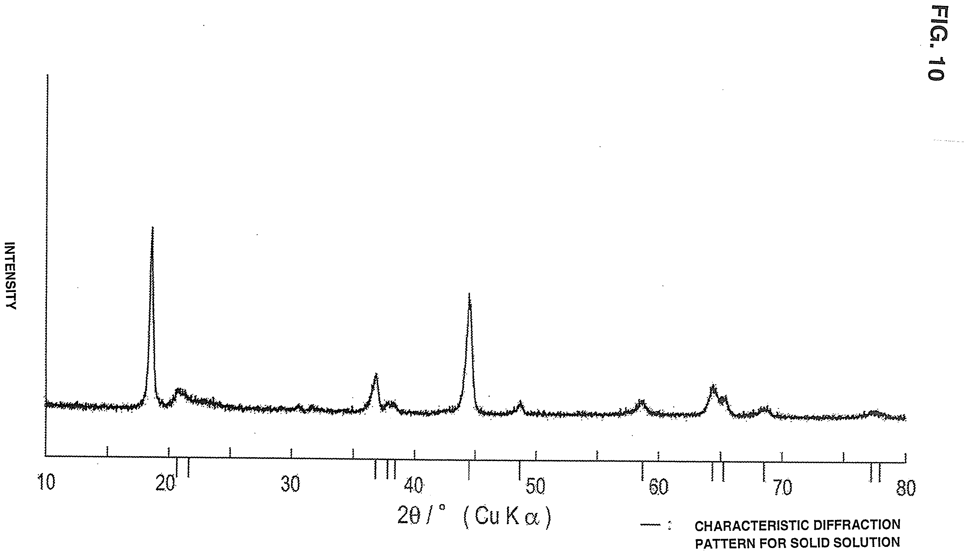

The X-ray diffraction pattern of the positive electrode active material C11 is illustrated in Fig. 10. In the X-ray diffraction pattern, the same peaks as the positive electrode active material C1 of Example 1 were observed. In addition, the cell for evaluation was fabricated in the same manner as in Example 1 using the positive electrode active material C11 thus obtained and subjected to the initial charging treatment and the activation treatment, and the performance evaluation and the lifetime evaluation were performed. The results of evaluation are presented in Tables 1 and 3 to be described below.

### [Example 12]

### (Preparation of aqueous solution of zirconium citrate complex)

With about 2.5 g of metallic zirconium powder (350 mesh), 200 ml of 30% hydrogen peroxide and 50 ml of 30% aqueous ammonia were mixed (molar ratio of metallic titanium : hydrogen peroxide : ammonia = 1 : 34 : 17) and dissolved while cooling in a water bath so as to obtain a yellow transparent zirconium peroxo solution. Anhydrous citric acid was added to the solution thus obtained at a mole to be 1.1 times 1 mol of zirconium and dissolved while heating at 60°C, thereby obtaining an aqueous solution of zirconium citrate complex. The concentration of Zr was 5.0% by weight as ZrO₂.

A positive electrode active material C12 having the following composition was prepared in the same manner as in Example 9 except using the aqueous solution of zirconium citrate complex instead of the aqueous solution of titanium citrate complex.

Composition Formula: Li_{1.5}[Ni_{0.375}Mn_{0.775}[Li]_{0.25}Zr_{0.10}]O_{z}

The cell for evaluation was fabricated in the same manner as in Example 1 using the positive electrode active material C12 thus obtained and subjected to the initial charging treatment and the activation treatment, and the performance evaluation and the lifetime evaluation were performed. The results of evaluation are presented in Tables 1 and 3 to be described below.

### [Example 13]

### (Preparation of aqueous solution of niobium citrate complex)

To 400 ml of acetone, 60 g (0.3 mol) of anhydrous citric acid (molecular weight: 192.12 g/mol) was added and dissolved by heating at 60°C. Subsequently, 63.64 g (0.2 mol) of niobium pentaethoxide (molecular weight: 318.21 g/mol) was added to the mixture so as to cause precipitation. This solution was suction filtered to obtain a precipitate (pale yellow). The precipitate thus obtained was added to H₂O (200 ml) and dissolved by heating at 50 to 60°C. The solution thus obtained was allowed to stand for one or more days to settle the insoluble matter and then filtered to remove the insoluble matter, thereby obtaining an aqueous solution of niobium citrate complex. The concentration of Nb was 5.0% by weight as Nb₂O₅.

A positive electrode active material C13 having the following composition was prepared in the same manner as in Example 9 except using the aqueous solution of niobium citrate complex instead of the aqueous solution of titanium citrate complex.

Composition Formula: Li_{1.5}[Ni_{0.375}Mn_{0.775}[Li]_{0.25}Nb_{0.10}]O_{z}

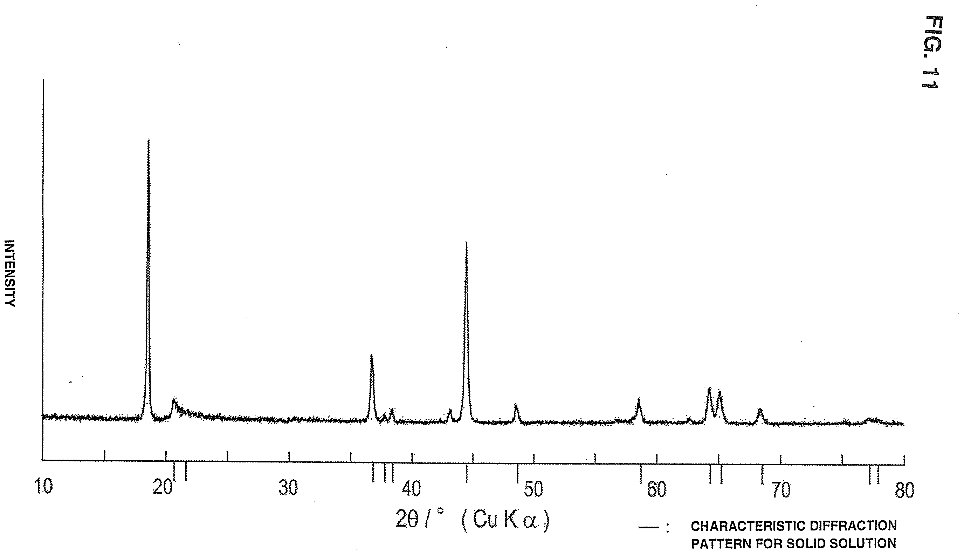

The X-ray diffraction pattern of the positive electrode active material C13 is illustrated in Fig. 11. In the X-ray diffraction pattern, the same peaks as the positive electrode active material C1 of Example 1 were observed. In addition, the cell for evaluation was fabricated in the same manner as in Example 1 using the positive electrode active material C13 thus obtained and subjected to the initial charging treatment and the activation treatment, and the performance evaluation and the lifetime evaluation were performed. The results of evaluation are presented in Tables 1 and 3 to be described below.

### [Example 14]

### (Preparation of aqueous solution of niobium citrate complex)

With about 2.5 g of metallic niobium powder (350 mesh), 200 ml of 30% hydrogen peroxide and 50 ml of 30% aqueous ammonia were mixed (molar ratio of metallic titanium : hydrogen peroxide : ammonia = 1 : 34 : 17) and dissolved while cooling in a water bath so as to obtain a yellow transparent niobium peroxo solution. Anhydrous citric acid was added to the solution thus obtained at a mole to be 1.1 times 1 mol of niobium and dissolved while heating at 60°C, thereby obtaining an aqueous solution of niobium citrate complex. The concentration of Nb was 5.0% by weight as Nb₂O₅.

A positive electrode active material C14 having the following composition was prepared in the same manner as in Example 9 except using the aqueous solution of niobium citrate complex instead of the aqueous solution of titanium citrate complex.

Composition Formula: Li_{1.5}[Ni_{0.375}Mn_{0.775}[Li]_{0.25}Nb_{0.10}]O_{z}

The cell for evaluation was fabricated in the same manner as in Example 1 using the positive electrode active material C14 thus obtained and subjected to the initial charging treatment and the activation treatment, and the performance evaluation and the lifetime evaluation were performed.

### [Comparative Example 1]

### (Preparation of positive electrode active material D1)

Li_{1.5}[Ni_{0.375}Mn_{0.775}[Li]_{0.25}Ti_{0.10}]O_{z}

The mixture of 7.47 g of manganese carbonate (molecular weight: 114.95 g/mol), 2.97 g of nickel carbonate (molecular weight: 118.70 g/mol) and 6.36 g of lithium hydroxide monohydrate (molecular weight: 41.96 g/mol) was crushed. To the crushed product, 0.28 g of titanium tetraisopropoxide (molecular weight: 284.22 g/mol) was added. The mixture thus obtained was heated at 200 to 300°C and the titanium tetraisopropoxide was pyrolyzed. This dry powder thus obtained was prefired at 400°C for hours and then fired at 900°C for 12 hours.

A positive electrode active material D1 thus obtained had the following composition.

Composition Formula: Li_{1.5}[Ni_{0.375}Mn_{0.775}[Li]_{0.25}Ti_{0.10}]O_{z}

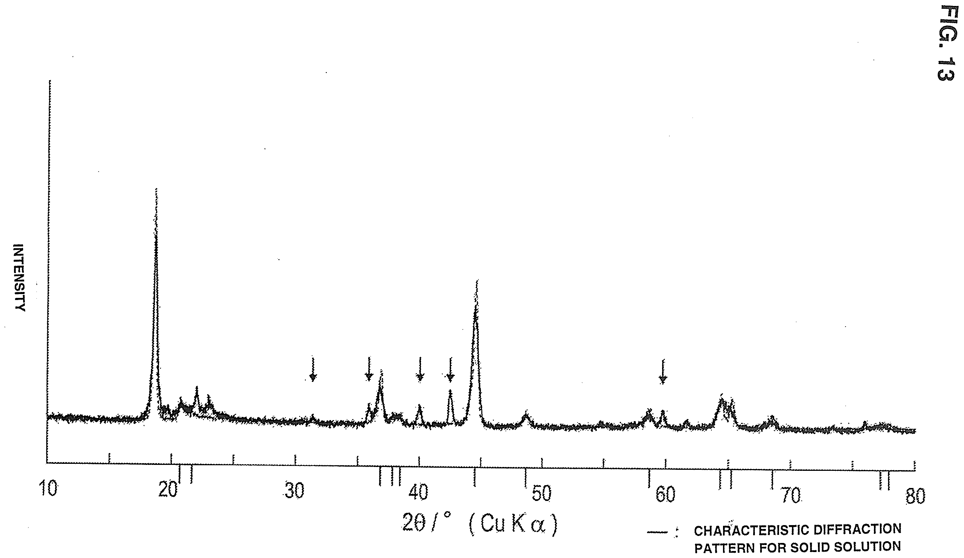

a + b + c + d + e = 1.5, d = 0.25, a + b + c + e = 1.25, and e = 0.1. The X-ray diffraction pattern of the positive electrode active material D1 is illustrated in Fig. 13 by a solid line. For comparison, the X-ray diffraction pattern of the positive electrode active material C1 of Example 1 is illustrated by a broken line. In the X-ray diffraction pattern of the positive electrode active material D1, the peaks of impurities indicated by the downward arrows were confirmed. In addition, the cell for evaluation was fabricated in the same manner as in Example 1 using the positive electrode active material thus obtained and subjected to the initial charging treatment and the activation treatment, and the performance evaluation and the lifetime evaluation were performed. The results of evaluation are presented in Tables 2 and 4 to be described below.

### [Comparative Example 2]

### (Preparation of positive electrode active material D2)

Li_{1.5}[Ni_{0.375}Mn_{0.775}[Li]_{0.25}Ti_{0.10}]O_{z}

With 15.97 g of the aqueous solution of titanium citrate complex (5.0% by weight as TiO₂), 7.47 g of manganese carbonate (molecular weight: 114.95 g/mol), 2.97 g of nickel carbonate (molecular weight: 118.70 g/mol) and 6.36 g of lithium hydroxide monohydrate (molecular weight: 41.96 g/mol) were mixed and crushed. This mixture was heated to 200 to 300°C to perform the pyrolysis. The dry powder thus obtained was prefired at 400°C for 4 hours and then fired at 900°C for 12 hours.

A positive electrode active material D2 thus obtained had the following composition.

Composition Formula: Li_{1.5}[Ni_{0.375}Mn_{0.775}[Li]_{0.25}Ti_{0.10}]O_{z}

a + b + c + d + e = 1.5, d = 0.25, a + b + c + e = 1.25, and e = 0.1. The X-ray diffraction pattern of the positive electrode active material D2 is illustrated in Fig. 14 by a solid line. For comparison, the X-ray diffraction pattern of the positive electrode active material C1 of Example 1 is illustrated by a broken line. In the X-ray diffraction pattern of the positive electrode active material D2, the peaks of impurities indicated by the downward arrows were confirmed. In addition, the cell for evaluation was fabricated in the same manner as in Example 1 using the positive electrode active material thus obtained and subjected to the initial charging treatment and the activation treatment, and the performance evaluation and the lifetime evaluation were performed. The results of evaluation are presented in Tables 2 and 4 to be described below.

For each of the positive electrode active materials C1 to C14 and D1 and D2 which are prepared in Examples 1 to 14 and Comparative Examples 1 and 2 above, the values of a, b, c, d, e, a + b + c + d + e, and a + b + c + e obtained according to Composition Formulas above are summarized in Table 1. In the Tables Examples 6 and 7 are Reference Examples.

**[Table 1]**

| Example | Active material | Li | Ni | Mn | Co | [Li] | Ti | a+b+c+d+e | a+b+c+e | XRD diffraction pattern |
|---|---|---|---|---|---|---|---|---|---|---|
| | | - | a | b | c | d | e | | | |
| - | C0 | 1.50 | 0.375 | 0.875 | 0.000 | 0.25 | 0.00 | 1.50 | 1.25 | Fig. 3 |
| 1 | C1 | 1.50 | 0.375 | 0.775 | 0.000 | 0.25 | 0.10 | 1.50 | 1.25 | Fig. 4 |
| 2 | C2 | 1.50 | 0.375 | 0.775 | 0.000 | 0.25 | 0.10 | 1.50 | 1.25 | Fig. 5 |
| 3 | C3 | 1.50 | 0.375 | 0.675 | 0.000 | 0.25 | 0.20 | 1.50 | 1.25 | |
| 4 | C4 | 1.50 | 0.150 | 0.310 | 0.000 | 0.40 | 0.64 | 1.50 | 1.10 | Fig. 6 |
| 5 | C5 | 1.50 | 0.225 | 0.505 | 0.000 | 0.35 | 0.42 | 1.50 | 1.15 | |
| 6 Reference | C6 | 1.50 | 0.525 | 0.765 | 0.000 | 0.15 | 0.06 | 1.50 | 1.35 | |
| 7 Reference | C7 | 1.50 | 0.600 | 0.780 | 0.000 | 0.10 | 0.02 | 1.50 | 1.40 | Fig. 7 |
| 8 | C8 | 1.50 | 0.375 | 0.575 | 0.000 | 0.25 | 0.30 | 1.50 | 1.25 | |
| 9 | C9 | 1.50 | 0.250 | 0.650 | 0.250 | 0.25 | 0.10 | 1.50 | 1.25 | Fig. 8 |
| 10 | C10 | 1.50 | 0.375 | 0.775 | 0.000 | 0.25 | 0.10 | 1.50 | 1.25 | Fig. 9 |
| Example | Active material | Li | Ni | Mn | Co | [Li] | Zr | a+b+c+d+e | a+b+c+e | XRD diffraction pattern |
| | | - | a | b | c | d | e | | | |
| 11 | C11 | 1.500 | 0.375 | 0.775 | 0.000 | 0.25 | 0.10 | 1.500 | 1.25 | Fig. 10 |
| 12 | C12 | 1.500 | 0.375 | 0.775 | 0.000 | 0.25 | 0.10 | 1.500 | 1.25 | |
| Reference Examples | Active material | Li | Ni | Mn | Co | [Li] | Nb | a+b+c+d+e | a+b+c+e | XRD diffraction pattern |
| | | - | a | b | c | d | e | | | |
| 13 | C13 | 1.500 | 0.375 | 0.775 | 0.000 | 0.25 | 0.10 | 1.50 | 1.25 | Fig. 11 |
| 14 | C14 | 1.500 | 0.375 | 0.775 | 0.000 | 0.25 | 0.10 | 1.50 | 1.25 | |

**[Table 2]**

| Comparative Example | Active material | Li | Ni | Mn | Co | [Li] | Ti | a+b+c+d+e | a+b+c+e | XRD diffraction pattern |
|---|---|---|---|---|---|---|---|---|---|---|
| | | - | a | b | c | d | e | | | |
| 1 | D1 | 1.50 | 0.375 | 0.775 | 0.000 | 0.25 | 0.10 | 1.50 | 1.25 | 12 |
| 2 | D2 | 1.50 | 0.375 | 0.775 | 0.000 | 0.25 | 0.10 | 1.50 | 1.25 | 13 |

**[Table 3]**

| Example | Positive electrode | Negative electrode | Charge capacity mAh/g | Discharge capacity mAh/g | Capacity retention rate (%) | DCR increase rate (%) |
|---|---|---|---|---|---|---|
| 1 | C1 | A11 | 278 | 225 | 85.1 | 15.3 |
| 2 | C2 | A11 | 278 | 225 | 85.2 | 15.2 |
| 3 | C3 | A11 | 275 | 223 | 86.0 | 15.1 |
| 4 | C4 | A11 | 258 | 209 | 91.5 | 14.1 |
| 5 | C5 | A11 | 261 | 212 | 89.6 | 15.0 |
| 6 | C6 | A11 | 281 | 227 | 84.3 | 14.3 |
| 7 | C7 | A11 | 283 | 230 | 83.4 | 15.6 |
| 8 | C8 | A11 | 272 | 221 | 86.8 | 15.0 |
| 9 | C9 | A11 | 283 | 225 | 86.0 | 14.8 |
| 10 | C10 | A11 | 278 | 225 | 85.1 | 15.2 |
| 11 | C11 | A11 | 269 | 225 | 85.1 | 15.3 |
| 12 | C12 | A11 | 269 | 225 | 85.1 | 15.3 |
| 13 | C13 | A11 | 276 | 224 | 84.7 | 15.2 |
| 14 | C14 | A11 | 276 | 224 | 84.7 | 15.2 |

**[Table 4]**

| Example | Positive electrode | Negative electrode | Charge capacity mAh/g | Discharge capacity mAh/g | Capacity retention rate (%) | DCR increase rate (%) |
|---|---|---|---|---|---|---|
| 1 | D11 | A11 | 222 | 180 | 68.1 | 25.5 |
| 2 | D12 | A11 | 236 | 191 | 72.3 | 23.5 |

As presented in Tables 1 to 4, Examples in which at least one kind of Ti, Zr and Nb was incorporated in the positive electrode active material exhibited superior charge and discharge capacities, a superior capacity retention rate and a superior DCR increase rate compared with Comparative Examples. In addition, Examples 4 and 5 having a great incorporated amount of Ti exhibited a particularly excellent capacity retention rate among Examples. As described above, it is possible to realize a non-aqueous electrolyte secondary cell excellent in cycle characteristics by using those having a specific composition and a specific structure as the positive electrode active material.

### Reference Signs List

- 10a: parallel laminate type cell
- 10b: series laminate type cell
- 11: negative electrode current collector
- 11a: outermost negative electrode current collector
- 12: negative electrode active material layer
- 13: electrolyte layer
- 14: positive electrode current collector
- 15: positive electrode active material layer
- 16: single cell layer
- 17: power generating element
- 18: negative electrode current collector plate
- 19: positive electrode current collector plate
- 20: negative electrode terminal lead
- 21: positive electrode terminal lead
- 22: laminate film
- 23: current collector
- 23a: outermost positive electrode current collector
- 23b: outermost negative electrode current collector
- 24: bipolar electrode
- 25: seal portion (insulating portion)

## Claims

1. A positive electrode active material for a non-aqueous electrolyte secondary cell, comprising:
the following Composition Formula (1):
Li_{1.5}[NiₐMn_{b}CO_{c}[Li]_{d}[X]ₑ[O]_{z} (1)
where X is at least one kind of Ti, Zr and Nb, 0.1 ≤ e ≤ 0.3, a+b+c+d=1.5, 0.1 ≤ d ≤ 0.4, 1.1 ≤ [a+b+c+e] ≤ 1.4, and z represents the number of oxygen satisfying the valence, wherein the positive electrode active material shows diffraction peaks indicating a rock salt type layered structure at 20 to 23°, 35 to 40° (101), 42 to 45° (104) and 64 to 65 (108)/65 to 66 (110) in an X-ray diffraction (XRD) measurement carried out using Cu-K_{α} radiation.

2. The positive electrode active material for a non-aqueous electrolyte secondary cell according to claim 1, comprising three diffraction peaks at 35 to 40° (101) and one diffraction peak at 42 to 45° (104) in an X-ray diffraction (XRD) measurement.

3. The positive electrode active material according to claim 1 or 2, comprising a diffraction peak at 20 to 23°, 35.5 to 36.5" (101), 43.5 to 44.5° (104) and 64 to 65 (108)/65 to 66 (110) in an X-ray diffraction (XRD) measurement.

4. A method for producing the positive electrode active material according to any one of claims 1 to 3, the method comprising:
a first process of mixing a citrate salt of at least one kind of Ti, Zr and Nb with an organic acid salt of a transition metal having a melting point of 100°C to 350°C;
a second process of melting the mixture obtained in the first process at 100°C to 350°C;
a third process of pyrolyzing the molten product obtained in the second process at a temperature equal to or higher than the melting point; and
a fourth process of firing the pyrolysate obtained in the third process.

5. The production method according to claim 4, wherein an organic acid salt of an alkali metal is further mixed in the first process.

6. A positive electrode for a non-aqueous electrolyte secondary cell comprising the positive electrode active material according to any one of claims 1 to 3 or a positive electrode active material produced by the production method according to claim 4 or 5.

7. A non-aqueous electrolyte secondary cell comprising:
the positive electrode according to claim 6;
a negative electrode containing a negative electrode active material capable of intercalating and deintercalating a lithium ion; and
an electrolyte layer interposed between the positive electrode and the negative electrode,
wherein the negative electrode active material has a surface covered with an amorphous carbon layer, includes a non-flaky graphite material, and has a BET specific surface area in a range of 0.8 to 1.5 m²/g and a tap density in a range of 0.9 to 1.2 g/cm³.

8. The non-aqueous electrolyte secondary cell according to claim 7, wherein the electrolytic solution contains:
at least one kind of dimethyl carbonate, diethyl carbonate, dipropyl carbonate, methyl propyl carbonate, ethyl propyl carbonate, methyl ethyl carbonate, ethylene carbonate, propylene carbonate, butylene carbonate, fluorine-containing cyclic carbonate, fluorine-containing chain carbonate, fluorine-containing chain ether, and fluorine-containing chain ester;
LiPF6; and
at least one kind of additive for electrolytic solution of an organic sulfone-based compound, an organic disulfone-based compound, a vinylene carbonate derivative, an ethylene carbonate derivative, an ester derivative, a dihydric phenol derivative, a terphenyl derivative, a phosphate derivative, and a lithium fluorophosphate derivative.

## Patentansprüche

1. Positivelektrodenaktivmaterial für eine Sekundärzelle mit nichtwässrigem Elektrolyten, umfassend:
die folgende Zusammensetzungsformel (1):
Li_{1,5}[NiₐMn_{b}Co_{c}[Li]_{d}[X]ₑ[O]_{z} (1)
wobei X mindestens eines von Ti, Zr und Nb ist, 0,1 ≤ e 0,3, a+b+c+d = 1,5, 0,1 ≤ d ≤ 0,4, 1,1 ≤ [a+b+c+e] ≤ 1,4, und z die Anzahl an Sauerstoff darstellt, die die Valenz ausgleicht, wobei das Positivelektrodenaktivmaterial Beugungspeaks zeigt, die auf eine steinsalzartige Schichtstruktur bei 20 bis 23°, 35 bis 40° (101), 42 bis 45° (104) und 64 bis 65 (108)/65 bis 66 (110) in einer Röntgendiffraktometrie(XRD)-Messung, die unter Verwendung von Cu-Kα-Strahlung durchgeführt wird, hindeuten.

2. Positivelektrodenaktivmaterial für eine Sekundärzelle mit nichtwässrigem Elektrolyten nach Anspruch 1, umfassend drei Beugungspeaks bei 35 bis 40 ° (101) und einen Beugungspeak bei 42 bis 45° (104) in einer Röntgendiffraktometrie(XRD)-Messung.

3. Positivelektrodenaktivmaterial nach Anspruch 1 oder 2, umfassend einen Beugungspeak bei 20 bis 23°, 35,5 bis 36,5 " (101), 43,5 bis 44,5° (104), 64 bis 65 (108)/65 bis 66 (110) in einer Röntgendiffraktometrie(XRD)-Messung.

4. Verfahren zur Herstellung des Positivelektrodenaktivmaterials nach einem der Ansprüche 1 bis 3, wobei das Verfahren
einen ersten Prozess des Mischens eines Zitratsalzes von mindestens einem von Ti, Zr und Nb mit einem organischen Säuresalz eines Übergangsmetalls mit einem Schmelzpunkt von 100 °C bis 350 °C;
einen zweiten Prozess des Schmelzens der Mischung, die in dem ersten Prozess erhalten wird, bei 100 °C bis 350 °C;
einen dritten Prozess des Pyrolysierens des geschmolzenen Produktes, das in dem zweiten Prozess erhalten wird, bei einer Temperatur, die höher als der oder gleich dem Schmelzpunkt ist; und
einen vierten Prozess des Brennens des Pyrolysats, das in dem dritten Prozess erhalten wird, umfasst.

5. Herstellungsverfahren nach Anspruch 4, wobei ein organisches Säuresalz eines Alkalimetalls weiterhin im ersten Prozess hinzugemischt wird.

6. Positivelektrode für eine Sekundärzelle mit nichtwässrigem Elektrolyten, umfassend das Positivelektrodenaktivmaterial nach einem der Ansprüche 1 bis 3 oder ein Positivelektrodenaktivmaterial, das durch das Herstellungsverfahren nach Anspruch 4 oder 5 hergestellt wird.

7. Sekundärzelle mit nichtwässrigem Elektrolyten, umfassend:
die Positivelektrode nach Anspruch 6;
eine Negativelektrode, die ein Negativelektrodenaktivmaterial, das fähig ist ein Lithiumion zu interkalieren und zu deinterkalieren, enthält; und
eine Elektrolytschicht, die zwischen der Positivelektrode und der Negativelektrode angeordnet ist,
wobei das Negativelektrodenaktivmaterial eine Oberfläche hat, die mit einer amorphen Kohlenstoffschicht bedeckt ist, ein nichtflockiges Graphitmaterial beinhaltet und eine BET spezifische Oberfläche in einem Bereich von 0,8 bis 1,5 m²/g und eine Klopfdichte in einem Bereich von 0,9 bis 1,2 g/cm³ aufweist.

8. Sekundärzelle mit nichtwässrigem Elektrolyten nach Anspruch 7, wobei die Elektrolytlösung
mindestens eines von Dimethylcarbonat, Diethylcarbonat, Dipropylcarbonat, Methylpropylcarbonat, Ethylpropylcarbonat, Methylethylcarbonat, Ethylencarbonat, Propylencarbonat, Butylencarbonat, fluorhaltiges cyclisches Carbonat, fluorhaltiges kettenförmiges Carbonat, fluorhaltigem kettenförmigen Ether, und fluorhaltigem kettenförmigen Ester;
LiPF6; und
mindestens ein Additiv für eine Elektrolytlösung aus einer organischen sulfonbasierten Verbindung, einer organischen disulfonbasierten Verbindung, einem Vinylencarbonatderivat, einem Ethylencarbonatderivat, eines Esterderivats, einem Dihydroxyphenolderivat, einem Terphenylderivat, einem Phosphatderivat und einem Lithiumfluorphosphatderivat enthält.

## Revendications

1. Matériau actif d'électrode positive pour un accumulateur à électrolyte non aqueux, comprenant :
la Formule de Composition suivante (1) :
Li_{1,5}[NiₐMn_{b}Co_{c}[Li]_{d}[X]ₑ[O]_{z} (1)
dans laquelle X est au moins un type de Ti, Zr et Nb, 0,1 ≤ e ≤ 0,3, a + b + c + d = 1,5, 0,1 ≤ d ≤ 0,4, 1,1 ≤ [a + b + c + e] ≤ 1,4, et z représente le nombre d'atomes d'oxygène satisfaisant la valence, où le matériau actif d'électrode positive présente des pics de diffraction indiquant une structure en couches du type sel gemme à des angles compris entre 20 et 23°, 35 et 40° (101), 42 et 45° (104) et 64 et 65 (108)/65 et 66 (110) dans une mesure de diffraction des rayons X (XRD) effectuée en utilisant un rayonnement Cu-K_{α}.

2. Matériau actif d'électrode positive pour un accumulateur à électrolyte non aqueux selon la revendication 1, comprenant trois pics de diffraction à un angle compris entre 35 et 40° (101) et un pic de diffraction à un angle compris entre 42 et 45° (104) dans une mesure de diffraction des rayons X (XRD).

3. Matériau actif d'électrode positive selon la revendication 1 ou 2, comprenant un pic de diffraction à des angles compris entre 20 et 23°, 35,5 et 36,5° (101), 43,5 et 44,5° (104) et 64 et 65 (108)/65 et 66 (110) dans une mesure de diffraction des rayons X (XRD).

4. Procédé de production du matériau actif d'électrode positive selon l'une quelconque des revendications 1 à 3, le procédé comprenant :
un premier procédé de mélange d'un sel citrate d'au moins un type de Ti, Zr et Nb avec un sel d'acide organique d'un métal de transition ayant un point de fusion compris entre 100°C et 350°C ;
un deuxième procédé de fusion du mélange obtenu dans le premier procédé à une température comprise entre 100°C et 350°C ;
un troisième procédé de pyrolyse du produit fondu obtenu dans le deuxième procédé à une température supérieure ou égale au point de fusion ; et
un quatrième procédé de cuisson du pyrolysat obtenu dans le troisième procédé.

5. Procédé de production selon la revendication 4, dans lequel un sel d'acide organique d'un métal alcalin est en outre mélangé dans le premier procédé.

6. Électrode positive pour un accumulateur à électrolyte non aqueux comprenant le matériau actif d'électrode positive selon l'une quelconque des revendications 1 à 3 ou un matériau actif d'électrode positive produit par le procédé de production selon la revendication 4 ou 5.

7. Accumulateur à électrolyte non aqueux comprenant :
l'électrode positive selon la revendication 6 ;
une électrode négative contenant un matériau actif d'électrode négative capable d'intercaler et de désintercaler un ion lithium ; et
une couche d'électrolyte interposée entre l'électrode positive et l'électrode négative,
où le matériau actif d'électrode négative a une surface recouverte d'une couche de carbone amorphe, comporte un matériau de graphite non floconneux, et a une surface spécifique BET se trouvant dans une plage allant de 0,8 à 1,5 m²/g et une densité après tassement se trouvant dans une plage allant de 0,9 à 1,2 g/cm³.

8. Accumulateur à électrolyte non aqueux selon la revendication 7, dans lequel la solution électrolytique contient :
au moins un type de carbonate de diméthyle, de carbonate de diéthyle, de carbonate de dipropyle, de carbonate de méthylpropyle, de carbonate d'éthylpropyle, de carbonate de méthyléthyle, de carbonate d'éthylène, de carbonate de propylène, de carbonate de butylène, de carbonate cyclique contenant du fluor, de carbonate en chaîne contenant du fluor, d'éther en chaîne contenant du fluor, et d'ester en chaîne contenant du fluor ;
LiPF6 ; et
au moins un type d'additif pour la solution électrolytique d'un composé organique à base de sulfone, d'un composé organique à base de disulfone, d'un dérivé de carbonate de vinylène, d'un dérivé de carbonate d'éthylène, d'un dérivé d'ester, d'un dérivé de phénol dihydrique, d'un dérivé de terphényle, d'un dérivé de phosphate, et d'un dérivé de fluorophosphate de lithium.
